# FASCICULE DE BREVET EUROPEEN

(11) **EP 1 412 918 B1**
(45) Date de publication et mention de la délivrance du brevet: **21.02.2007**
(21) Numéro de dépôt: 02743348.1
(22) Date de dépôt: 05.06.2002
(51) Int. Cl.: G06T 1/00

(54) **PROCEDE ET SYSTEME POUR PRODUIRE DES INFORMATIONS FORMATEES LIEES AUX DISTORSIONS GEOMETRIQUES**
VERFAHREN UND SYSTEM ZUR HERSTELLUNG VON AUF GEOMETRISCHEN VERZERRUNGEN BEZOGENEN FORMATIERTEN INFORMATIONEN
METHOD AND SYSTEM FOR PRODUCING FORMATTED DATA RELATED TO GEOMETRIC DISTORTIONS

(30) Priorité: 12.07.2001 FR 0109292; 12.07.2001 FR 0109291; 02.10.2001 FR 0112664
(43) Date de publication de la demande: 28.04.2004
(73) Titulaire: DO Labs, 92100 Boulogne Billancourt (FR)
(72) Inventeur: CHAUVILLE, Benoît, F-75011 PARIS (FR); GUICHARD, Frédéric, F-75012 PARIS (FR); LAVEST, Jean-Marc, F-63000 CLERMONT-FERRAND (FR); LIEGE, Bruno, F-75015 PARIS (FR)
(74) Mandataire: Grynwald, Albert
(86) Numéro de dépôt international: PCT/FR2002/001906
(87) Numéro de publication internationale: WO 2003/007237

(56) Documents cités:
- EP-A- 0 867 690
- EP-A- 0 964 353
- EP-A- 1 104 175
- WO-A-01/35052
- WO-A-99/27470
- US-A- 5 353 392
- US-B1- 6 173 087
- WATANABE M ET AL: "AN IMAGE DATA FILE FORMAT FOR DIGITAL STILL CAMERA" FINAL PROGRAM AND ADVANCE PRINTING OF PAPERS. ANNUAL CONFERENCE. IMAGING ON THE INFORMATION SUPERHIGHWAY, XX, XX, 1995, pages 421-424, XP000618775
- PATENT ABSTRACTS OF JAPAN vol. 2000, no. 08, 6 octobre 2000 (2000-10-06) & JP 2000 137806 A (CANON INC), 16 mai 2000 (2000-05-16)

## Description

La présente invention concerne un procédé et un système pour produire des informations formatées liées aux distorsions géométriques.

Le document WO 01/35052 A (ARMSTRONG BRIAN S ;SCHMIDT KARL B (US)) 17 mai 2001 (2001-05-17) divulgue un procédé pour produire des informations relatives aux distorsions géométriques en photogrammétrie. Son système à lentilles comporte des caractéristiques fixes et des caractéristiques variables susceptibles d'être associées à une ou plusieurs valeurs de caractéristiques. Sa méthode produit des informations mesurées liées aux distorsions géométriques à partir d'un champ mesuré, et aussi d'autres informations présentant un écart par rapport aux informations mesurées. Les informations produites à partir des informations mesurées sont représentées par les paramètres d'un modèle paramétrable. Le champ mesuré est obtenu par la mesure de points de l'image présentant un intérêt particulier, par exemple par détection d'un marquage de référence.

### Solution

### Procédé

L'invention concerne un procédé pour produire des informations formatées liées aux appareils d'une chaîne d'appareils comme défini dans la revendication 1. La chaîne d'appareils comprend notamment au moins un appareil de capture d'image et/ou au moins un appareil de restitution d'image. Le procédé comprend l'étape de produire des informations formatées liées aux distorsions géométriques d'au moins un appareil de la chaîne.

De préférence, selon l'invention, l'appareil permettant de capturer ou restituer une image sur un support. L'appareil comporte au moins une caractéristique fixe et/ou une caractéristique variable selon l'image. La caractéristique fixe et/ou caractéristique variable est susceptible d'être associée à une ou plusieurs valeurs de caractéristiques, notamment la focale et/ou la mise au point et leurs valeurs de caractéristiques associées. Le procédé comprend l'étape de produire des informations formatées mesurées liées aux distorsions géométriques de l'appareil à partir d'un champ mesuré. Les informations formatées peuvent comprendre les informations formatées mesurées.

### Informations formatées étendues et écart

De préférence, selon l'invention, le procédé comprend en outre l'étape de produire des informations formatées étendues liées aux distorsions géométriques du appareil à partir des informations formatées mesurées. Les informations formatées peuvent comprendre les informations formatées étendues. Les informations formatées étendues présentent un écart par rapport auxdites informations formatées mesurées.

De préférence, selon l'invention le procédé est tel que les informations formatées, produites à partir des informations formatées mesurées, sont représentées par les paramètres d'un modèle paramétrable choisi parmi un ensemble de modèles paramétrables, notamment un ensemble de polynômes. Le procédé comprend en outre l'étape de sélectionner le modèle paramétrable dans l'ensemble de modèles paramétrables en :
- définissant un écart maximal,
- ordonnant les modèles paramétrables de l'ensemble de modèles paramétrables selon leur degré de complexité de mise en oeuvre,
- choisissant le premier des modèles paramétrables de l'ensemble de modèles paramétrables ordonné pour lequel l'écart est inférieur à l'écart maximal.

Selon une variante de réalisation de l'invention, les informations formatées étendues peuvent être les informations formatées mesurées.

De préférence, selon l'invention le procédé comprend un premier algorithme de calcul permettant d'obtenir le champ mesuré à partir d'un référentiel comportant des points caractéristiques et d'une référence virtuelle composée de points de référence sur une surface de référence. Le premier algorithme de calcul comprend l'étape de capturer ou de restituer le référentiel au moyen de l'appareil pour produire une image des points caractéristiques sur le support. L'image d'un point caractéristique est ci-après appelée le point caractéristique image.

Le premier algorithme de calcul comprend en outre :
- l'étape d'établir une bijection entre les points caractéristiques images et les points de référence,
- l'étape de sélectionner zéro, une ou plusieurs caractéristiques variables parmi l'ensemble des caractéristiques variables, ci-après désignées les caractéristiques variables sélectionnées.

Le champ mesuré est composé de :
- l'ensemble des couples constitués d'un des points de référence et du point caractéristique image associé par la bijection, et de
- la valeur, pour l'image concernée, de chacune des caractéristiques variables sélectionnées.

De préférence, selon l'invention, le procédé comprend en outre l'étape de choisir une projection mathématique, notamment une homographie, entre le support et la surface de référence. Le champ mesuré est composé de la valeur, pour l'image, de chacune des caractéristiques variables sélectionnées et pour chaque point de référence:
- du couple constitué du point de référence et de la projection mathématique, sur la surface de référence, du point caractéristique image associé par la bijection au point de référence, et/ou
- du couple constitué du point caractéristique image associé par la bijection au point de référence et de la projection mathématique sur le support, du point de référence.

### Interpolation pour formater à un point quelconque.

De préférence, selon l'invention, le procédé comprend en outre l'étape d'obtenir les informations formatées étendues relatives à un point de référence quelconque sur la surface de référence et/ou à un point caractéristique image quelconque du support, en déduisant les informations formatées, relatives au point de référence quelconque ou au point caractéristique image quelconque, à partir des informations formatées mesurées.

### Focale Variable

De préférence, selon l'invention, le procédé est tel que l'appareil de la chaîne d'appareil présente au moins une caractéristique variable selon l'image, notamment la focale et/ou la mise au point. Chaque caractéristique variable est susceptible d'être associée à une valeur pour former une combinaison constituée de l'ensemble des caractéristiques variables et des valeurs. Le procédé comprend en outre les étapes suivantes :
- l'étape de sélectionner des combinaisons prédéterminées,
- l'étape de calculer des informations formatées mesurées, notamment en mettant en oeuvre le premier algorithme de calcul pour chacune des combinaisons prédéterminées ainsi sélectionnées.

### Focale Variable - Formatage à un point quelconque.

On appelle argument, selon le cas :
- un point de référence quelconque sur la surface de référence et une combinaison, ou
- un point caractéristique image quelconque de le support et à une combinaison.

De préférence, selon l'invention Le procédé comprend en outre l'étape de déduire les informations formatées étendues relatives à un argument quelconque à partir des informations formatées mesurées. Il résulte de la combinaison des traits techniques que les informations formatées sont plus compactes et robustes aux erreurs de mesure.

### Choix d'un seuil sur l'écart et formatage selon ce seuil

De préférence, selon l'invention, le procédé est tel que pour déduire les informations formatées étendues à partir des informations formatées mesurées :
- on définit un premier seuil,
- on sélectionne les informations formatées étendues telles que l'écart soit inférieur au premier seuil.

### Rajout des écarts aux informations formatées

De préférence, selon l'invention, le procédé comprend en outre l'étape d'associer les écarts aux informations formatées. Il résulte de la combinaison des traits techniques que les informations formatées peuvent être utilisées par des logiciels de traitement d'images capturées par un appareil, pour obtenir des images dont la distorsion géométrique résiduelle est connue. Il résulte de la combinaison des traits techniques que les informations formatées peuvent être utilisées par des logiciels de traitement d'images pour obtenir des images destinées à être restituées par un appareil de restitution d'images avec une distorsion géométrique résiduelle connue.

### Choix de l'homographie

De préférence, selon l'invention, le procédé comprend en outre l'étape de sélectionner sur le support quatre points caractéristiques images tels que le quadrilatère défini par les quatre points caractéristiques images est celui ayant une surface maximale et un centre de gravité situé à proximité du centre géométrique de l'image. La projection mathématique est l'homographie transformant les quatre points caractéristiques images en les points de référence associés par la bijection aux quatre points caractéristiques images. Il résulte de la combinaison des traits techniques qu'il est ainsi possible d'obtenir simplement des informations formatées pouvant être utilisées par des logiciels de traitement d'images pour capturer ou restituer des images avec un faible changement de perspective.

### Cas de l'image couleur distorsions

De préférence, selon l'invention, l'image est une image en couleur composée de plusieurs plans couleur. Le procédé comprend en outre l'étape de produire les informations formatées mesurées en mettant en oeuvre le premier algorithme de calcul pour au moins deux des plans couleur, en utilisant la même projection mathématique pour chacun des plans couleur. Ainsi, il est possible d'utiliser les informations formatées et/ou informations formatées mesurées pour corriger les distorsions et/ou les aberrations chromatiques de l'appareil.

De préférence, selon l'invention, l'image est une image en couleur composée de plusieurs plans couleur. Le procédé comprend en outre l'étape de produire les informations formatées mesurées en mettant en oeuvre le premier algorithme de calcul pour au moins un des plans couleur, en utilisant la même référence virtuelle pour chacun des plans couleur. Ainsi, il est possible d'utiliser les informations formatées et/ou informations formatées mesurées pour corriger les aberrations chromatiques du appareil.

### Système

L'invention concerne un système pour produire des information 7 formatées liées aux appareils d'une chaîne d' appareils comme défini dans la revendication 11. La chaîne d'appareils comprend notamment au moins un appareil de capture d'image et/ou au moins un appareil de restitution d'image. Le système comprend des moyens de calcul pour produire des informations formatées liées aux distorsions géométriques d'au moins un appareil de la chaîne.

L'appareil permet de capturer ou restituer une image sur un support. L'appareil comporte au moins une caractéristique fixe et/ou une caractéristique variable selon l'image. La caractéristique fixe et/ou caractéristique variable est susceptible d'être associée à une ou plusieurs valeurs de caractéristiques, notamment la focale et/ou la mise au point et leurs valeurs de caractéristiques associées. De préférence, selon l'invention, le système comprend des moyens de calcul pour produire des informations formatées mesurées liées aux distorsions géométriques de l'appareil à partir d'un champ mesuré. Les informations formatées peuvent comprendre les informations formatées mesurées.

### Informations formatées étendues et écart

De préférence, selon l'invention, le système comprend en outre des moyens de calcul pour produire des informations formatées étendues liées aux distorsions géométriques de l'appareil à partir des informations formatées mesurées. Les informations formatées peuvent comprendre les informations formatées étendues. Les informations formatées étendues présentent un écart par rapport aux informations formatées mesurées.

### Notion de modèle - Interpolation -Choix d'un seuil et choix du modèle le plus simple pour arriver au seuil

De préférence, selon l'invention, le système est tel que les informations formatées, produites à partir des informations formatées mesurées, sont représentées par les paramètres d'un modèle paramétrable choisi parmi un ensemble de modèles paramétrables, notamment un ensemble de polynômes. Le système comprend en outre des moyens de sélection pour sélectionner le modèle paramétrable dans l'ensemble de modèles paramétrables. Les moyens de sélection comprennent des moyens de traitement informatique pour :
- définir un écart maximal,
- ordonner les modèles paramétrables de l'ensemble de modèles paramétrables selon leur degré de complexité de mise en oeuvre,
- choisir le premier des modèles paramétrables de l'ensemble de modèles paramétrables ordonné pour lequel l'écart est inférieur au écart maximal.

Selon une variante de réalisation de l'invention, les informations formatées étendues peuvent être les informations formatées mesurées.

De préférence, selon l'invention, le système comprend des moyens de calcul mettant en oeuvre un premier algorithme de calcul permettant d'obtenir le champ mesuré à partir d'un référentiel comportant des points caractéristiques et d'une référence virtuelle composée de points de référence sur une surface de référence. L'appareil de capture d'image ou l'appareil de restitution d'image comprend des moyens de capture ou des moyens de restitution du référentiel permettant de produire une image des points caractéristiques sur le support. L'image d'un point caractéristique est ci-après appelée le point caractéristique image.

Les moyens de calcul du premier algorithme de calcul comprennent en outre des moyens de traitement informatique pour :
- établir une bijection entre les points caractéristiques images et les points de référence,
- sélectionner zéro, une ou plusieurs caractéristiques variables parmi l'ensemble des caractéristiques variables, ci-après désignées les caractéristiques variables sélectionnées.

Le champ mesuré est composé de :
- l'ensemble des couples constitués d'un des points de référence et du point caractéristique image associé par la bijection, et de
- la valeur, pour l'image, de chacune des caractéristiques variables sélectionnées.
   De préférence, selon l'invention, le système comprend en outre des moyens d'analyse pour choisir une projection mathématique, notamment une homographie, entre le support et la surface de référence. Le champ mesuré est composé de la valeur, pour l'image, de chacune des caractéristiques variables sélectionnées et pour chaque point de référence ;
- du couple constitué du point de référence et de la projection mathématique, sur la surface de référence, du point caractéristique image associé par la bijection au point de référence, et/ou
- du couple constitué du point caractéristique image associé par la bijection au point de référence et de la projection mathématique, sur le support, du point de référence.

### Interpolation pour formater à un point quelconque

De préférence, selon l'invention, le système comprend en outre des moyens de traitement informatique pour obtenir les informations formatées étendues relatives à un point de référence quelconque sur la surface de référence et/ou à un point caractéristique image quelconque du support, en déduisant les informations formatées, relatives au point de référence quelconque ou au point caractéristique image quelconque, à partir des informations formatées mesurées.

### Focale Variable

De préférence, selon l'invention, le système est tel que l'appareil de la chaîne d'appareil présente au moins une caractéristique variable selon l'image, notamment la focale et/ou la mise au point. Chaque caractéristique variable est susceptible d'être associée à une valeur pour former une combinaison constituée de l'ensemble des caractéristiques variables et des valeurs. Le système comprend en outre :
- des moyens de sélection pour sélectionner des combinaisons prédéterminées,
- des moyens de calcul pour calculer des informations formatées mesurées, notamment en mettant en oeuvre le premier algorithme de calcul pour chacune des combinaisons prédéterminées ainsi sélectionnées.

### Focale Variable - Formatage à un point quelconque

Un argument désigne, selon le cas :
- un point de référence quelconque sur la surface de référence et une combinaison, ou
- un point caractéristique image quelconque du support et une combinaison.

De préférence, selon l'invention, le système comprend en outre des moyens de traitement informatique pour déduire les informations formatées étendues relatives à un argument quelconque à partir des informations formatées mesurées. Il résulte de la combinaison des traits techniques que les informations formatées sont plus compactes et robustes aux erreurs de mesure.

### Choix d'un seuil sur l'écart et formatage selon ce seuil

De préférence, selon l'invention, le système est tel que les moyens de traitement informatique pour déduire les informations formatées étendues à partir des informations formatées mesurées, comprennent des moyens de sélection pour sélectionner les informations formatées étendues telles que l'écart soit inférieur à un premier seuil.

### Rajout des écarts aux informations formatées

De préférence, selon l'invention, les écarts sont associés auxdites informations formatées. Il résulte de la combinaison des traits techniques que les informations formatées peuvent être utilisées par des logiciels de traitement d'images capturées par l'appareil, pour obtenir des images dont la distorsion géométrique résiduelle est connue. Il résulte de la combinaison des traits techniques que les informations formatées peuvent être utilisées par des logiciels de traitement d'images pour obtenir des images destinées à être restituées par l'appareil de restitution d'images avec une distorsion géométrique résiduelle connue.

### Choix de l'homographie

De préférence, selon l'invention, le système comprend en outre des moyens de sélection pour sélectionner sur le support quatre points caractéristiques images tels que le quadrilatère défini par les quatre points caractéristiques images est celui ayant une surface maximale et un centre de gravité situé à proximité du centre géométrique de l'image. La projection mathématique est l'homographie transformant les quatre points caractéristiques images en les points de référence associés par la bijection aux quatre points caractéristiques images. Il résulte de la combinaison des traits techniques qu'il est ainsi possible d'obtenir simplement des informations formatées pouvant être utilisées par des logiciels de traitement d'images pour capturer ou restituer des images avec un faible changement de perspective.

### Cas de l'image couleur distorsions

L'image est une image en couleur composée de plusieurs plans couleur. De préférence, selon l'invention, le système comprend en outre des moyens de traitement informatique pour produire les informations formatées mesurées en mettant en oeuvre le premier algorithme de calcul pour au moins deux des plans couleur, en utilisant la même projection mathématique pour chacun des plans couleur. Ainsi, il est possible d'utiliser les informations formatées et/ou informations formatées mesurées pour corriger les distorsions et /ou les aberrations chromatiques de l'appareil.

De préférence, selon l'invention, l'image est une image en couleur composée de plusieurs plans couleur. Le système comprend en outre des moyens de traitement informatique pour produire les informations formatées mesurées en mettant en oeuvre le premier algorithme de calcul pour au moins un des plans couleur, en utilisant la même référence virtuelle pour chacun des plans couleur. Ainsi, il est possible d'utiliser les informations formatées et/ou les informations formatées mesurées pour corriger les aberrations chromatiques de l'appareil.

### Description détaillée

D'autres caractéristiques et avantages de l'invention apparaîtront à la lecture de la description des variantes de réalisation de l'invention données à titre d'exemple indicatif et non limitatif, et de figures qui représentent respectivement:
- figure 1 : une vue schématique d'une capture d'image,
- figure 2 : une vue schématique d'une restitution d' image,
- figure 3 : une vue schématique des pixels d'une image,
- figures 4a et 4b : deux vues schématiques d'une scène de référence,
- figure 5 : l'organigramme de la méthode permettant de calculer la différence entre l'image mathématique et l'image corrigée,
- figure 6 : l'organigramme de la méthode permettant d'obtenir la meilleure transformation de restitution pour un moyen de restitution d'image,
- figure 7 : une vue schématique des éléments composant le système selon l'invention,
- figure 8 : une vue schématique des champs des informations formatées,
- figure 9a : une vue schématique de face d'un point mathématique,
- figure 9b : une vue schématique de face d'un point réel d'une image,
- figure 9c : une vue schématique de profil d'un point mathématique,
- figure 9d : une vue schématique de profil d'un point réel d'une image,
- figure 10 : une vue schématique d'une grille de points caractéristiques,
- figure 11 : l'organigramme de la méthode permettant d'obtenir les informations formatées,
- figure 12 : l'organigramme de la méthode permettant d'obtenir la meilleure transformation pour un appareil de capture d'image,
- figures 13a et 13b : des diagrammes permettant d'expliquer la production d'un champ mesuré en utilisant des bijections,
- figures 14a et 14b : des diagramme permettant d'expliquer la production d'un champ mesuré en utilisant des bijections et des projections mathématiques,
- figures 15a et 15b : un procédé dans lequel le champ mesuré est produit sous la forme d'un polynôme,
- figures 16a et 16b : une variante d'un procédé de calcul d'un champ mesuré,
- figures 17 et 18 : des procédés d'interpolation de l'information formatée d'un point à partir d'informations formatées connues,
- figures 19a à 19c : des variantes du procédé permettant de minimiser le nombre de points de calcul du champ mesurée,
- figures 20a à 20d : un procédé permettant de calculer les informations formatées relatives à une image couleur,
- figure 21 : un procédé relatif à la correction d'une image déformée par une projection,
- figure 22 : une variante du procédé permettant de minimiser le nombre de points de calcul dans les cas de la correction d'une distorsion géométrique,
- figure 23a à 23c : un procédé permettant d'éliminer des zones non traitées d'une image corrigée,
- figure 24 : des informations formatées liées aux distorsions géométriques d'un appareil APP1 d'une chaîne d'appareils P3,
- figure 25 : un exemple de réalisation d'un système selon l'invention.

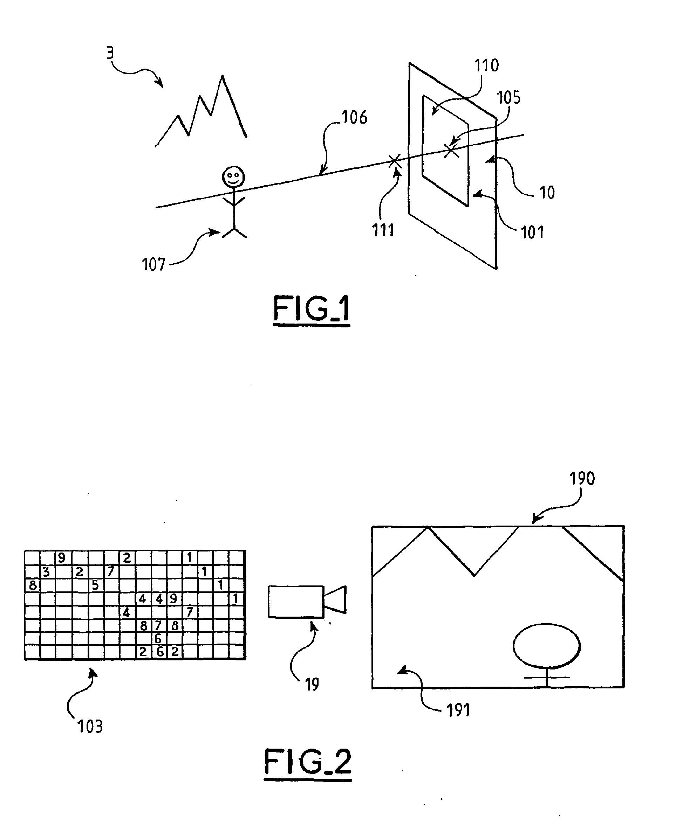

Sur la figure 1, on a représenté : une scène 3 comportant un objet 107, un capteur 101 et la surface du capteur 110, un centre optique 111, un point d'observation 105 sur une surface du capteur 110, une direction d'observation 106 passant par le point d'observation 105, le centre optique 111, la scène 3, une surface 10 géométriquement associée à la surface du capteur 110.

Sur la figure 2, on a représenté une image 103, un moyen de restitution d'image 19 et une image restituée 191 obtenue sur le support de restitution 190.

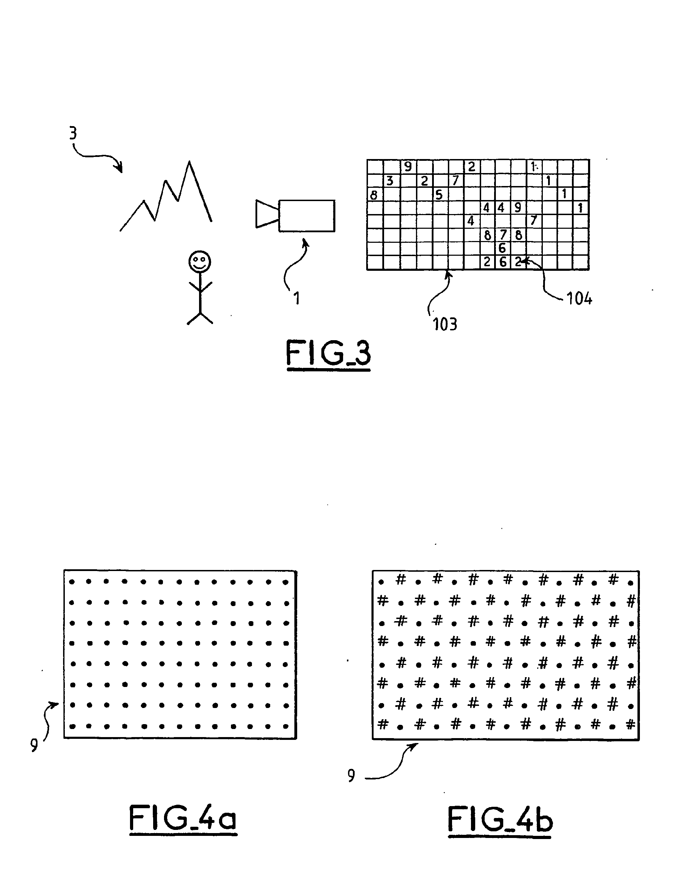

Sur la figure 3 on a représenté une scène 3, un appareil de capture d'image 1 et une image 103 constituée de pixels 104.

Sur les figures 4a et 4b, on a représenté deux variantes d'une scène de référence 9.

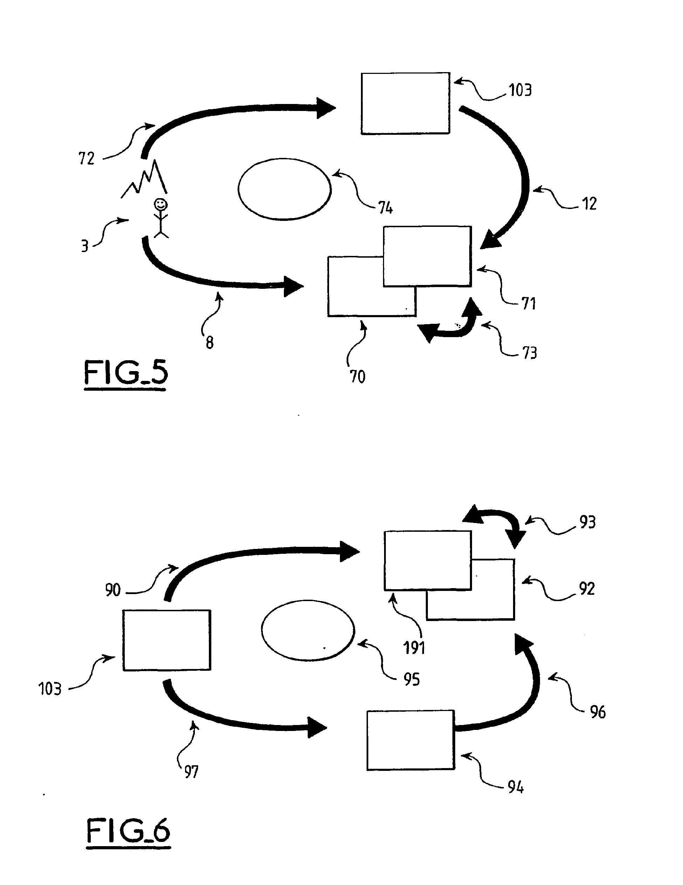

Sur la figure 5 on a représenté un organigramme mettant en oeuvre une scène 3, une projection mathématique 8 donnant une image mathématique 70 de la scène 3, une projection réelle 72 donnant une image 103 de la scène 3 pour les caractéristiques utilisées 74, un modèle de transformation paramétrable 12 donnant une image corrigée 71 de l'image 103, l'image corrigée 71 présentant une différence 73 avec l'image mathématique 70.

Sur la figure 6 on a représenté un organigramme mettant en oeuvre une image 103, une projection réelle de restitution 90 donnant une image restituée 191 de l'image 103 pour les caractéristiques de restitution utilisées 95, un modèle de transformation paramétrable de restitution 97 donnant une image corrigée de restitution 94 de l'image 103, une projection mathématique de restitution 96 donnant une image mathématique de restitution 92 de l'image corrigée de restitution 94 et présentant une différence de restitution 93 avec l'image restituée 191.

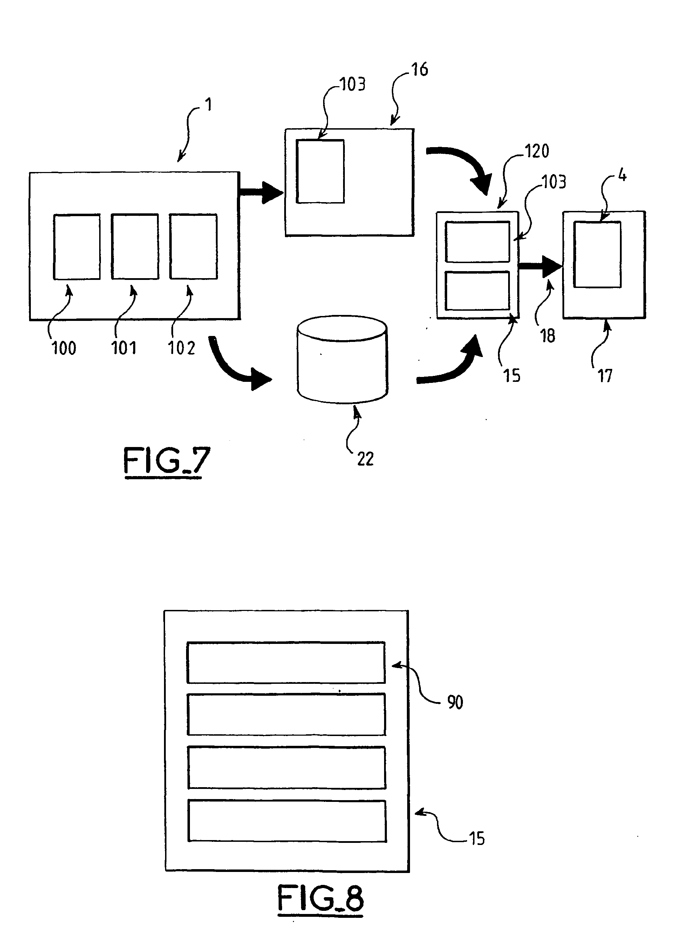

Sur la figure 7 on a représenté un système comprenant un appareil de capture d'image 1 constitué d'une optique 100, d'un capteur 101 et d'une électronique 102. Sur la figure 7 on a également représenté une zone mémoire 16 contenant une image 103, une base de données 22 contenant des informations formatées 15, des moyens de transmission 18 de l'image complétée 120 constituée de l'image 103 et des informations formatées 15 vers des moyens de calcul 17 contenant des logiciels de traitement d'image 4.

Sur la figure 8 on a représenté des informations formatées 15 constituées de champs 90.

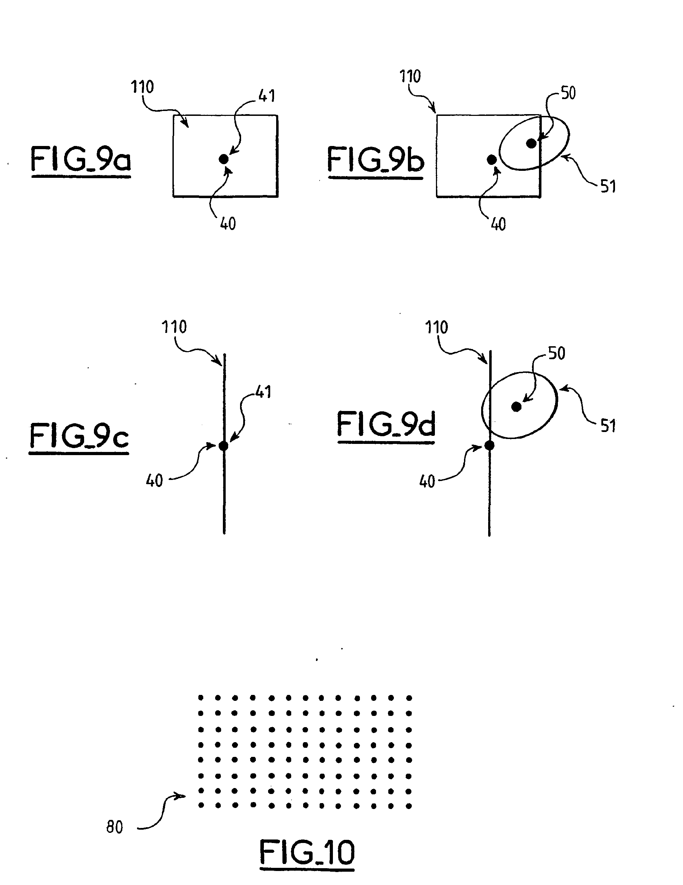

Sur les figures 9a à 9d on a représenté une image mathématique 70, une image 103, la position mathématique 40 d'un point, la forme mathématique 41 d'un point, comparés à la position réelle 50 et à la forme réelle 51 du point correspondant de l'image.

Sur la figure 10 on a représenté une grille 80 de points caractéristiques.

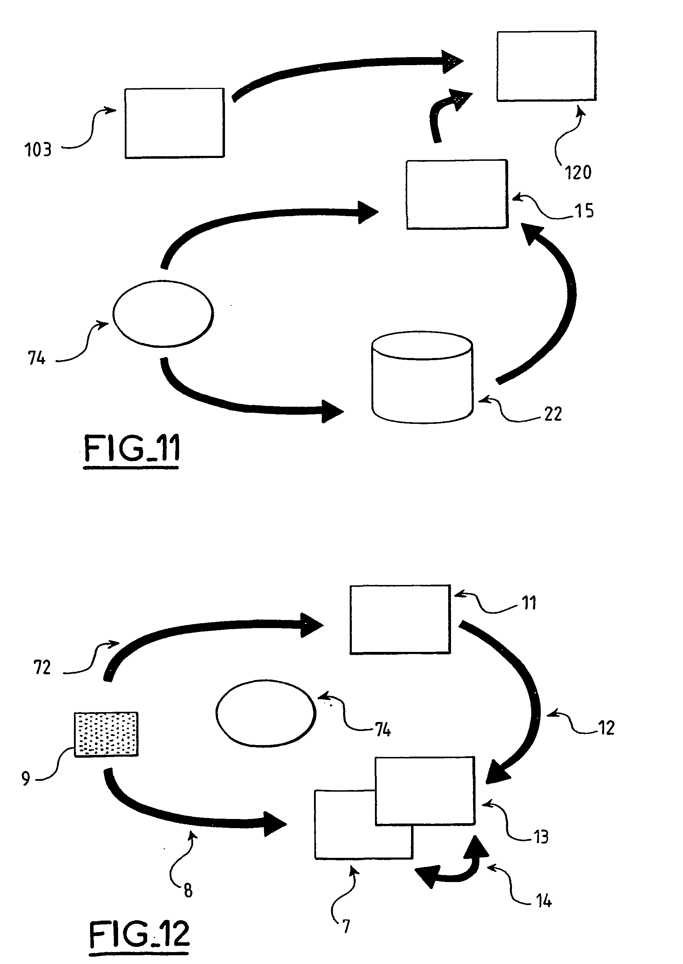

Sur la figure 11 on a représenté un organigramme mettant en oeuvre une image 103, des caractéristiques utilisées 74, une base de données de caractéristiques 22. Les informations formatées 15 sont obtenues à partir des caractéristiques utilisées 74 et stockées dans la base de données 22. L'image complétée 120 est obtenue à partie de l'image 103 et des informations formatées 15.

Sur la figure 12 on a représenté un organigramme mettant en oeuvre une scène de référence 9, une projection mathématique 8 donnant une classe d'image de synthèse 7 de la scène de référence 9, une projection réelle 72 donnant une image de référence 11 de la scène de référence 9 pour les caractéristiques utilisées 74. Cet organigramme met également en oeuvre un modèle de transformation paramétrable 12 donnant une image transformée 13 de l'image de référence 11. L'image transformée 13 présente un écart résiduel 14 avec la classe d'image de synthèse 7.

### Appareil

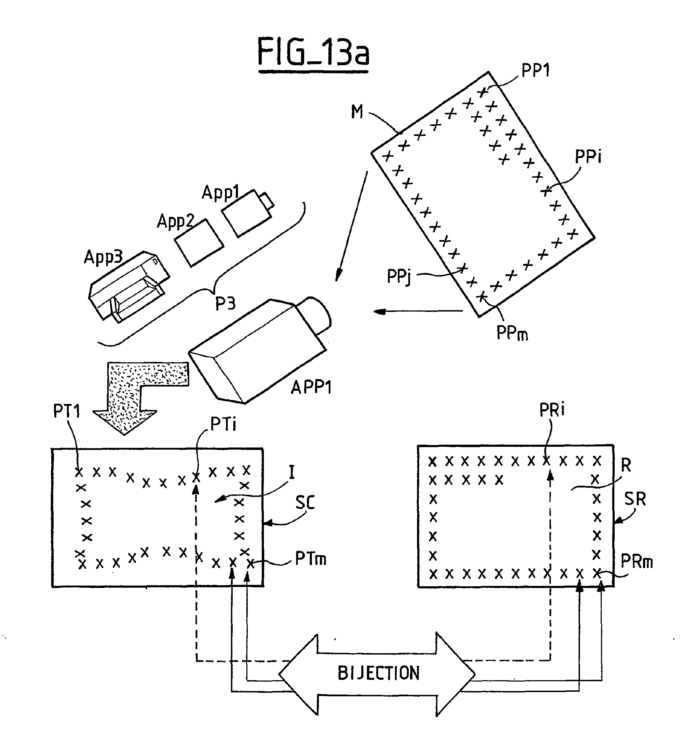

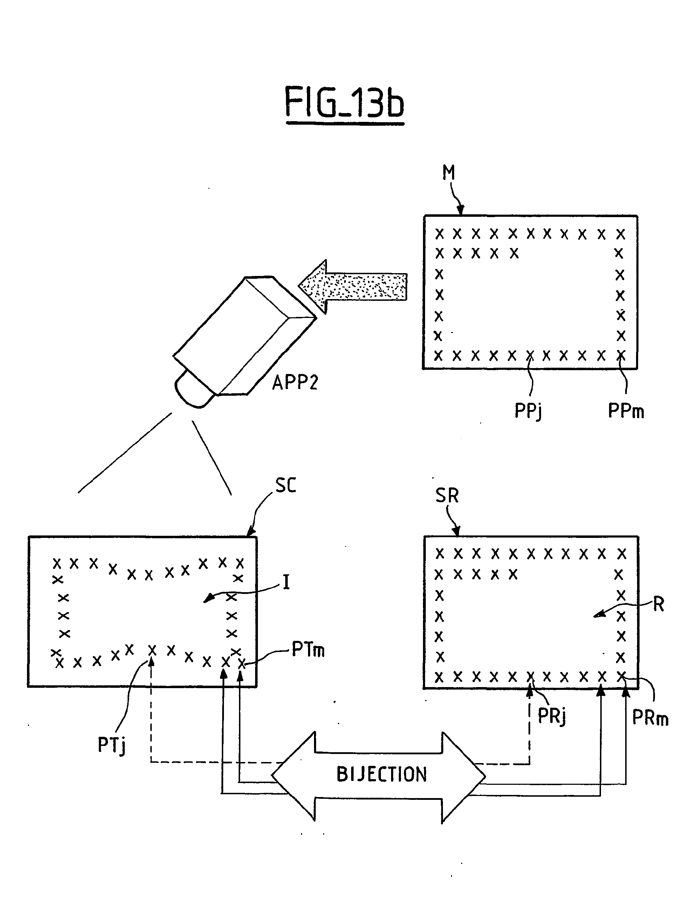

En se référant notamment aux figures 2, 3, 13a, 13b et 24, on va décrire la notion d'appareil APP1. Au sens de l'invention, un appareil APP1 peut être notamment:
- un appareil de capture d'image 1 comme présenté sur la figure 3 ou un appareil de capture d'image comme présenté sur la figure 13a, comme par exemple un appareil photo jetable, un appareil photo numérique, un appareil reflex, un scanner, un fax, un endoscope, un caméscope, une caméra de surveillance, une webcam, une caméra intégrée ou reliée à un téléphone, à un assistant personnel ou à un ordinateur, une caméra thermique, un appareil d'échographie,
- un appareil de restitution d'image APP2 comme représenté sur la figure 13b ou moyen de restitution d'image 19 comme représenté sur la figure 2 , comme par exemple un écran, un projecteur, un téléviseur, des lunettes de réalité virtuelle ou une imprimante,
- un être humain ayant des défauts de vision, par exemple l'astigmatisme,
- un appareil auquel on veut ressembler, pour produire des images ayant par exemple un aspect similaire à celles produites par un appareil de marque Leica,
- un dispositif de traitement d'images, par exemple un logiciel de zoom qui a comme effet de bord d'ajouter du flou,
- un appareil virtuel équivalent à plusieurs appareil APP1,

Un appareil APP1 plus complexe comme un scanner/fax/imprimante, un Minilab d'impression photo, un appareil de vidéo-conférence peut être considéré comme un appareil APP1 ou plusieurs appareils APP1.

### Chaîne d'appareils

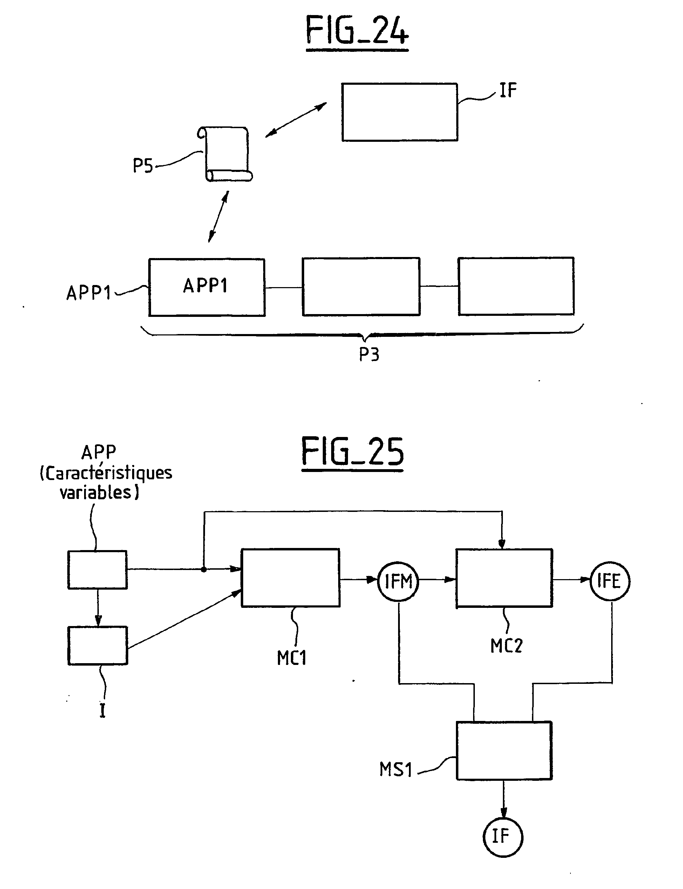

En se référant notamment à la figure 24, on va maintenant décrire la notion de chaîne d'appareils P3. On appelle chaîne d'appareils P3 un ensemble d'appareils APP1. La notion de chaîne d'appareils P3 peut en outre inclure une notion d'ordre.

Les exemples suivants constituent des chaînes d'appareils P3:
- un seul appareil APP1,
- un appareil de capture d'image et un appareil de restitution d'image,
- un appareil photo, un scanner, une imprimante par exemple dans un Minilab de tirage photo,
- un appareil photo numérique, une imprimante par exemple dans un Minilab de tirage photo,
- un scanner, un écran ou une imprimante, par exemple dans un ordinateur,
- un écran ou projecteur et l'oeil d'un être humain,
- un appareil et un autre appareil auquel on veut ressembler,
- un appareil photo et un scanner,
- un appareil de capture d'image, un logiciel de traitement d'images,
- un logiciel de traitement d'images, un appareil de restitution d'image,
- une combinaison des exemples précédents,
- un autre ensemble d'appareils APP1.

### Défaut

En se référant notamment à la figure 24, on va maintenant décrire la notion de défaut P5. On appelle défaut P5 de l'appareil APP1, un défaut lié aux caractéristiques de l'optique et/ou du capteur et/ou de l'électronique et/ou du logiciel intégré à un appareil APP1 ; des exemples de défauts P5 sont par exemple la distorsion géométrique, le flou, le vignetage, les aberrations chromatiques, le rendu des couleurs, l'uniformité du flash, le bruit du capteur, le grain, l'astigmatisme, l'aberration sphérique.

### Image

En se référant notamment à la figure 13a, on va maintenant décrire la notion d'image I. On appelle image I une image capturée ou modifiée ou restituée par un appareil APP1. L'image I peut provenir d'un appareil APP1 de la chaîne d'appareils P3. L'image I peut être destinée à un appareil APP1 de la chaîne d'appareils P3. Dans le cas d'images animées, par exemple vidéo, constituées d'une séquence dans le temps d'images fixes, on appelle image I : une image fixe de la séquence d'images.

### Informations formatées

En se référant notamment à la figure 24, on va maintenant décrire la notion d'informations formatées IF. On appelle informations formatées IF des données liées aux défauts P5 d'un ou plusieurs appareils APP1 de la chaîne d'appareils P3 et permettant de calculer une image transformée en tenant compte des défauts P5 de l'appareil APP1. Pour produire les informations formatées IF, on peut utiliser divers procédés basés sur des mesures, et/ou des captures ou restitution de références, et/ou des simulations.

Pour produire les informations formatées IF, on peut par exemple utiliser le procédé décrit dans la demande de brevet international déposée le même jour que la présente demande au nom de la société Vision IQ et sous le titre : "Procédé et système pour réduire la fréquence des mises à jour de moyens de traitement d'images." Dans cette demande, il est décrit un procédé pour réduire la fréquence des mises à jour de moyens de traitement d'images, notamment un logiciel et/ou un composant. Les moyens de traitement d'images permettant de modifier la qualité des images numériques provenant ou destinées à une chaîne d'appareils. La chaîne d'appareil comporte au moins un appareil de capture d'image et/ou au moins un appareil de restitution d'image. Les moyens de traitement d'image mettent en oeuvre des informations formatées liées aux défauts d'au moins un appareil de la chaîne d'appareils. Les informations formatées IF dépendent d'au moins une variable. Les informations formatées permettant d'établir une correspondance entre une partie des variables et des identifiants. Les identifiants permettent de déterminer la valeur de la variable correspondante à l'identifiant en tenant compte de l'identifiant et de l'image. Il résulte de la combinaison des traits techniques qu'il est possible de déterminer la valeur d'une variable, notamment dans le cas où la signification physique et/ou le contenu de la variable ne sont connus que postérieurement à la diffusion des moyens de traitement d'image. Il résulte également de la combinaison des traits techniques que le temps entre deux mises à jour du logiciel de correction peut être espacé. Il résulte également de la combinaison des traits techniques que les divers acteurs économiques qui produisent des appareils et/ou des moyens de traitement d'image peuvent mettre à jour leurs produits indépendamment des autres acteurs économiques, même si ces derniers changent radicalement les caractéristiques de leurs produit ou ne peuvent forcer leur client à mettre à jour leur produits. Il résulte également de la combinaison des traits techniques qu'une nouvelle fonctionnalité peut être déployée progressivement en commençant par un nombre limité d'acteurs économiques et d'utilisateurs pionniers.

Pour produire les informations formatées IF, on peut par exemple utiliser le procédé décrit dans la demande de brevet international déposée le même jour que la présente demande au nom de la société Vision IQ et sous le titre: "Procédé et système pour fournir, selon un format standard, des informations formatées à des moyens de traitement d'images." Dans cette demande, il est décrit un procédé pour fournir, selon un format standard, des informations formatées IF à des moyens de traitement d'images, notamment des logiciels et/ou des composants. Les informations formatées IF sont liées aux défauts d'une chaîne d'appareils P3. La chaîne d'appareils P3 comprend notamment au moins un appareil de capture d'image 1 et/ou un appareil de restitution d'image 19. Les moyens de traitement d'images utilisent les informations formatées IF pour modifier la qualité d'au moins une image provenant ou destinée à la chaîne d'appareils P3. Les informations formatées IF comportent des données caractérisant des défauts P5 de l'appareil de capture d'image 1, notamment les caractéristiques de distorsion, et/ou des données caractérisant des défauts de l'appareil de restitution des images 19, notamment les caractéristiques de distorsion.

Le procédé comprend l'étape de renseigner au moins un champ du format standard avec les informations formatées IF. Le champ est désigné par un nom de champ. Le champ contenant au moins une valeur de champ.

Pour utiliser les informations formatées IF, on peut par exemple utiliser le procédé décrit dans la demande de brevet international déposée le même jour que la présente demande au nom de la société Vision IQ et sous le titre: "Procédé et système pour modifier la qualité d'au moins une image provenant ou destinée à une chaîne d'appareils." Dans cette demande, il est décrit un procédé pour modifier la qualité d'au moins une image provenant ou destinée à une chaîne d'appareils déterminée. La chaîne d'appareils déterminée comprend au moins un appareil de capture d'image 1 et/ou au moins un appareil de restitution d'image 19. Les appareils de capture d'image 1 et/ou les appareils de restitution d'image 19, progressivement mis sur le marché par des acteurs économiques distincts, appartiennent à un ensemble indéterminé d'appareils. Les appareils APP1 de l'ensemble d'appareils présentent des défauts P5 qui peuvent être caractérisés par des informations formatées. Le procédé comprend, pour l'image concernée, les étapes suivantes :
- l'étape de répertorier des sources d'informations formatées relatives aux appareils de l'ensemble d'appareils,
- l'étape de rechercher de manière automatique, parmi les informations formatées ainsi répertoriées, des informations formatées spécifiques relatives à la chaîne d'appareils déterminée,
- l'étape de modifier de manière automatique l'image I au moyen de logiciels de traitement d'images et/ou de composants de traitement d'images en tenant compte des informations formatées spécifiques ainsi obtenues.

Pour utiliser les informations formatées IF, on peut par exemple utiliser le procédé décrit dans la demande de brevet international déposée le même jour que la présente demande au nom de la société Vision IQ et sous le titre: "Procédé et système pour calculer une image transformée à partir d'une image numérique et d'informations formatées relatives à une transformation géométrique." Dans cette demande, il est décrit un procédé pour calculer une image transformée à partir d'une image numérique et d'informations formatées IF relatives à une transformation géométrique, notamment des informations formatées IF relatives aux distorsions et/ou aberrations chromatiques d'une chaîne d'appareils. Le procédé comprend l'étape de calculer l'image transformée à partir d'une approximation de la transformation géométrique. Il en résulte que le calcul est économe en ressource mémoire, en bande passante mémoire, en puissance de calcul et donc en consommation électrique. Il en résulte également que l'image transformée ne présente pas de défaut visible ou gênant pour son utilisation ultérieure.

Pour utiliser les informations formatées IF, on peut par exemple utiliser le procédé décrit dans la demande de brevet international déposée le même jour que la demande de brevet international de la présente invention sous le numéro au nom de la société Vision IQ sous le titre : Procédé et système pour corriger les aberrations chromatiques d'une image couleur réalisée au moyen d'un système optique. Dans ce brevet, il est décrit un procédé pour corriger les aberrations chromatiques d'une image couleur composée de plusieurs plans couleurs numérisés. L'image couleur a été réalisée au moyen d'un système optique. Le procédé comprend les étapes suivantes :
- l'étape de modéliser et de corriger, au moins en partie, des anomalies de géométrie des plans couleurs numérisés, de manière à obtenir des plans couleurs numérisés corrigés,
- l'étape de combiner les plans couleur numérisés corrigés, de manière à obtenir une image couleur corrigée, en totalité ou en partie, des aberrations chromatiques.

### Caractéristique variable

On va maintenant décrire la notion de caractéristique variable. Selon l'invention, on appelle caractéristique variable un facteur mesurable et variable d'une image I à l'autre capturée, modifiée ou restituée par un même appareil APP1, et ayant une influence sur le défaut P5 de l'image capturée, modifiée ou restituée par l'appareil APP1, notamment :
- une variable globale, fixe pour une image I donnée, par exemple une caractéristique de l'appareil APP1 au moment de la capture ou de restitution de l'image liée à un réglage de l'utilisateur ou liée à un automatisme de l'appareil APP1,
- une variable locale, variable dans une image I donnée, par exemple des coordonnées x, y ou ro, theta dans l'image, permettant d'appliquer le cas échéant un traitement local différent selon la zone de l'image I.

N'est en général pas considéré comme une caractéristique variable : un facteur mesurable et variable d'un appareil APP1 à l'autre mais fixe d'une image I à l'autre capturée, modifiée ou restituée par un même appareil APP1, par exemple la focale pour un appareil APP1 à focale fixe.

Les informations formatées IF peuvent dépendre d'au moins une caractéristique variable.

Par caractéristique variable, on peut entendre notamment:
- la focale de l'optique,
- le redimensionnement appliqué à l'image (facteur de zoom numérique : grossissement d'une partie de l'image ; et/ou le sous-échantillonnage : diminution du nombre de pixels de l'image),
- la correction non linéaire de luminance, par exemple la correction de gamma,
- le rehaussement de contour, par exemple le niveau de déflouage appliqué par l'appareil APP1,
- le bruit du capteur et de l'électronique,
- l'ouverture de l'optique,
- la distance de mise au point,
- le numéro de la vue sur un film,
- la sur ou sous exposition,
- la sensibilité du film ou du capteur,
- le type de papier utilisé dans une imprimante,
- la position du centre du capteur dans l'image,
- la rotation de l'image par rapport au capteur,
- la position d'un projecteur par rapport à l'écran,
- la balance des blancs utilisée,
- l'activation du flash et/ou sa puissance,
- le temps de pose,
- le gain du capteur,
- la compression,
- le contraste,
- un autre réglage appliqué par l'utilisateur de l'appareil APP1, par exemple un mode de fonctionnement,
- un autre réglage automatique de l'appareil APP1,
- une autre mesure réalisée par l'appareil APP1.

### Valeur de caractéristique variable

On va maintenant décrire la notion de valeur de caractéristique variable. On appelle valeur de caractéristique variable la valeur de la caractéristique variable au moment de la capture, modification ou restitution d'une image déterminée.

### Modèle paramétrable

Au sens de l'invention, on appelle modèle paramétrable ou modèle de transformation paramétrable ou transformation paramétrable un modèle mathématique pouvant dépendre des caractéristiques variables et relatif à un ou plusieurs défauts P5 de un ou plusieurs appareils APP1. Les informations formatées IF relatives à un défaut P5 d'un appareil peuvent se présenter sous la forme des paramètres d'un modèle paramétrable dépendant des caractéristiques variables.

### Informations formatées liées aux distorsions géométriques

La figure 13a représente un organigramme mettant en oeuvre :
- un référentiel M qui peut être la scène de référence 9 précédente.
- un support SC comportant une image. Dans le cas d'un système de capture d'images, la surface SC peut être celle d'un capteur (CCD par exemple), ou dans le cas d'un système de restitution d'images, cette surface peut être celle d'un écran de projection ou celle d'une feuille de papier d'une imprimante.
- une surface de référence virtuelle SR (équivalente à la surface 10 précédente) comportant une référence virtuelle R ou image de référence virtuelle qui peut être une image de synthèse de la classe d'images de synthèse 7 précédente.

L'image I (appelée précédemment image de référence 11) est obtenue à partir du référentiel M à l'aide d'un appareil APP1 ou d'une chaîne d'appareils P3 sur un support SC qui peut être une surface de capteur. Une chaîne d'appareils est un ensemble d'appareils permettant d'obtenir une image. Par exemple, une chaîne d'appareils Appl/App2 /App3 pourra comprendre un appareil de capture d'images, un scanner, un appareil d'impression, etc.

L'image I comporte donc des défauts P5 et notamment des distorsions géométriques liées à ces appareils APP1.

La référence virtuelle R est déduite directement de M et doit être considérée comme parfaite ou comme quasi-parfaite. Elle peut être identique ou quasi-identique à M ou au contraire présenter des différences comme on le verra ultérieurement.

A titre d'exemple, nous pouvons expliciter le lien entre le référentiel M et la surface de référence R de la manière suivante : A des points PP1 à PPm du référentiel M correspondent des points de référence PR1 à PRm dans la référence virtuelle R de la surface de référence SR ainsi que des points caractéristiques images PT1 à PTm de l'image I du support SC.

Selon un exemple de réalisation de l'invention, on prévoit donc une étape de réalisation de l'image I à l'aide de l'appareil APP1 ou de la chaîne d'appareils P3.

Au cours d'une étape suivante, on choisit un certain nombre de points PTi, PRi. Ces points sont choisis en nombres limités et sont situés en des zones caractéristiques du référentiel M, de l'image I et de la référence virtuelle R. Puis on établit une bijection entre les points PTi de l'image et les points PRi de la référence virtuelle. Ainsi, à chaque point PTi choisi, on fait correspondre un point PRi correspondant et réciproquement.

Au cours d'une autre étape, il est possible sans que cela soit obligatoire, de choisir des caractéristiques variables de l'appareil (ou de la chaîne d'appareils) APP1 parmi celles utilisées pour obtenir l'image I avec l'appareil APP1. Les caractéristiques variables d'un appareil ou d'une chaîne d'appareils peuvent comprendre la focale de l'optique d'un appareil, le focus, l'ouverture, le numéro de la photo dans un ensemble de photos, le zoom numérique, les caractéristiques d'une capture partielle d'image (« crop » en terminologie anglo-saxonne), etc.

L'ensemble des informations suivantes constitue un champ mesuré DH qui permettra d'être utilisé, par la suite, pour corriger une image :
- la bijection, c'est-à-dire l'ensemble des couples de points Pti et PRi choisis et se correspondant par la bijection précédente,
- l'ensemble des caractéristiques variables choisies.

Ces informations qui constituent un champ de mesure permettront d'obtenir des informations formatées mesurées.

Dans une variante de réalisation, on peut utiliser un logiciel de simulation de l'appareil, notamment un logiciel de simulation optique, ou un banc de mesure optique pour calculer les points PTi à partir des points PPi du référentiel M ou à partir des points PPi d'un modèle du référentiel M.

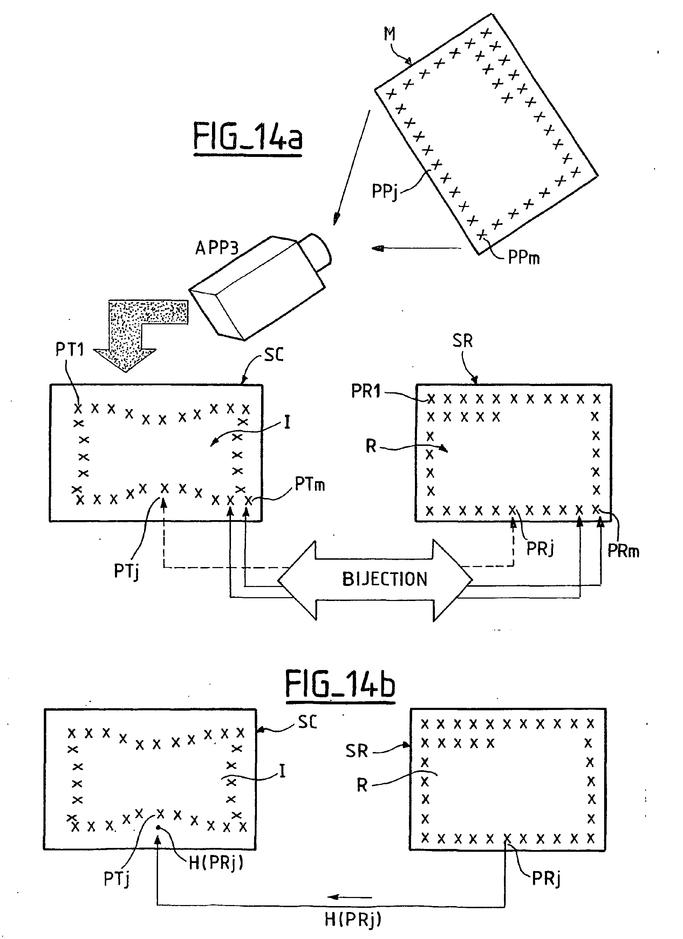

La figure 14a représente une autre forme d'obtention d'un champ mesuré.

Sur cette figure 14a, on retrouve le référentiel M, la surface de référence SR et le support SC.

Comme précédemment, on procède à la réalisation de l'image I sur le support SC à l'aide d'un appareil APP3. Puis, on réalise la bijection décrite précédemment.

Ensuite, on établit une projection mathématique et de préférence une homographie entre un point du support SC et un point de la surface de référence SR.

Sur la figure 14b, on voit que, pour chaque point PRj de la surface de référence, on peut obtenir un point H (PRj) de l'image par projection mathématique. De préférence, pour deux points PRj et PTj d'un couple liés par bijection, on a un point H(PRj), projection mathématique de PRj sur le support SC.

Dans ces conditions, on obtient un champ mesuré plus complet en ajoutant aux informations du champ les formules de projection mathématique établies. Un champ mesuré DH comporte donc :
- les caractéristiques variables choisies éventuellement ;
- pour différents points de référence PR, la projection mathématique H(PRj) du point de référence PRj sur le support SC fournissant ainsi un nouveau point H(PRj) associé au point PTj correspondant par bijection. On a ainsi dans le champ mesuré une série de couples de points liés par bijection, dans chaque couple, un point étant la projection mathématique de l'autre point du couple.

Le champ mesuré DH peut donc être également constitué:
- des caractéristiques variables choisies ;
- des couples constitués chacun d'un point PT de la surface de référence et d'un point H(PR) représentant la projection mathématique du point PR lié par bijection au point PT du support SC .

Le champ mesuré DH d'une image ainsi obtenu peut comporter en facteur les caractéristiques variables pour l'ensemble des couples de points obtenus de façon à réaliser un gain de place en mémoire.

Selon une autre variante de l'invention, le champ mesuré DH peut être constitué :
- des caractéristiques variables choisies ;
- des couples de points PT et des projections mathématiques de points PR (liés par bijection aux points PT) sur le support SC ;
- et des couples de points PR et des projections mathématiques de points PT (liés par bijection aux points PR) sur la surface de référence SR.

Comme précédemment, le champ mesuré DH permet d'obtenir des informations formatées mesurées.

Les exemples de procédés et systèmes précédents représentés par les figures 13a à 14b permettent d'obtenir un champ de mesures appelé champ mesuré DH et constitué d'autant d'ensembles d'informations qu'on a choisi de points de l'image I et de la référence virtuelle R.

Avec ce champ mesuré pour l'image I, on constitue un ensemble d'informations formatées mesurées IFM. Une information formatée mesurée d'un point PTj, comprendra donc par exemple :
- les caractéristiques fixes du ou des appareils utilisés ;
- les caractéristiques variables choisies ;
- la position en X et Y du point dans l'image PTj ;
- la projection mathématique du point PRj correspondant par bijection.

On notera qu'une projection mathématique particulière qu'il est possible d'utiliser, par exemple dans les scanners, est l'identité.

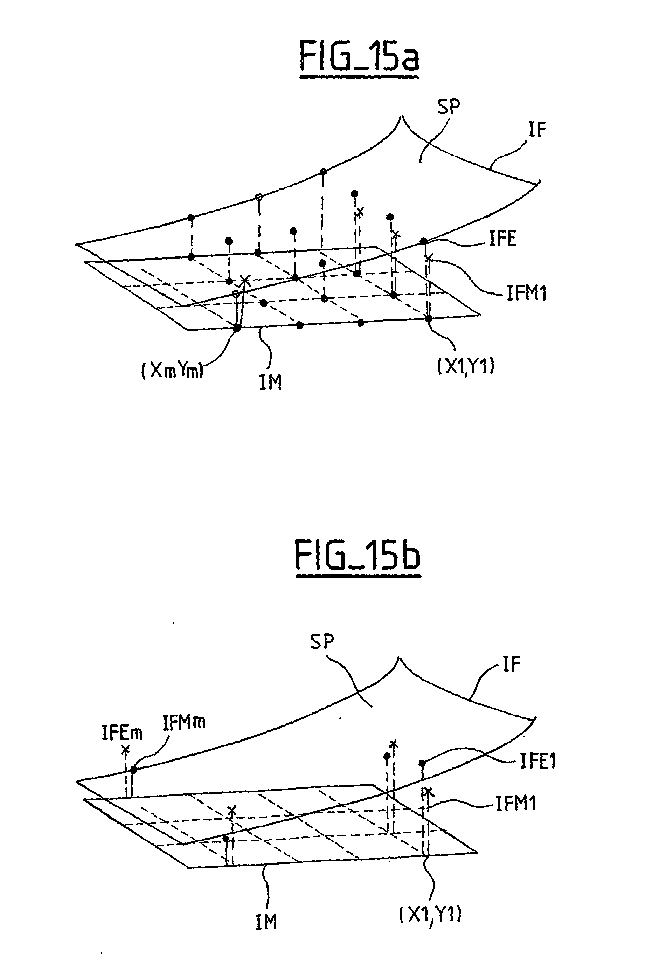

L'exploitation du système conduira à être obligé de traiter un grand nombre de points et donc un grand nombre d'informations. Pour assouplir le fonctionnement du système, accélérer le traitement et/ou être robuste aux erreurs de mesures, le procédé et système représenté par les figures 15a et 15b prévoient de déduire, à partir des informations formatées mesurées IFM1 à IFMm des informations formatées étendues IFE1 à IFEm appartenant à une surface pouvant être représentée par une fonction choisie dans un espace de dimension limité comme par exemple un polynôme d'ordre limité choisi parmi la classe des polynômes de degrés fini, ou une fonction spline de degrés approprié.

Les figures 15a et 15b représentent des exemples simplifiés correspondant à des cas où l'information formatée mesurée n'est fonction que d'une seule variable. L'invention est applicable de la même façon lorsque l'information formatée est fonction de plusieurs variables, ce qui est généralement le cas.

Les figures 15a et 15b représentent des exemples simplifiés correspondant à des cas où l'information formatée mesurée est un scalaire et n'est fonction que de deux variables (X ,Y). L'invention est applicable de la même façon lorsque l'information formatée est vectorielle et est fonction de plus de deux variables, ce qui est généralement le cas.

Sur la figure 15b, on a représenté dans le plan IM les différentes coordonnées des points d'une image. Au point de coordonnées X1, Y1, on trouve l'information formatée mesurée IFM1. A chaque point du plan IM on a donc une information formatée de valeur particulière. L'invention consiste à calculer un modèle paramétrable, tel qu'une surface polynomiale SP . Une façon particulière de calculer SP peut être de calculer cette surface, en passant par toutes les extrémités des informations formatées mesurées ou en passant à proximité. Une autre façon de procéder pourrait être de préserver des caractéristiques géométriques (non forcement euclidiennes) d'un sous ensemble des points de M telles que l'alignement de points selon un ligne droite, ou toute courbe de paramétrisation déterminée. Dans ces conditions, lors du traitement d'une image, au lieu d'avoir recours à un grand nombre d'informations formatées mesurées, le système pourra utiliser un modèle paramétrable.

La difficulté est de trouver une surface SP passant par tous les points ou à proximité de tous ces points. On prévoit d'admettre qu'il puisse exister un écart EC entre une information formatée mesurée IFM et une information formatée étendue IFE. De plus, on décide qu'un tel EC ne doit pas excéder un certain seuil dS. Dans ces conditions, il conviendra de faire passer une surface polynomiale par tous les points d'informations formatées mesurées IFM ± dS.

Le choix de ce seuil sera fait en adéquation avec les erreurs de prise de vue, les erreurs de mesures, le niveau de précision requis pour la correction, etc.

Le procédé et le système mis en oeuvre pourront prévoir d'utiliser un nombre déterminé de modèles paramétrables pouvant s'écrire par exemple sous la forme de polynômes. On prévoit de classer ces modèles par ordre de complexité croissante.

Ensuite, possédant un ensemble d'informations mesurées, on teste chaque modèle en partant de préférence du modèle le plus simple (le polynôme d'ordre le plus faible) jusqu'à obtenir un modèle qui définisse, à l'intersection de la surface polynomiale et de la direction de chaque information formatée mesurée, une information formatée étendue dont l'écart EC avec l'information formatée mesurée soit inférieur au seuil dS.

Le procédé et système schématisés par les figures 15a et 15b sont destinés à obtenir des informations formatées mesurées étendues. Cependant, l'invention pourrait se limiter à n'utiliser comme informations formatées que les informations formatées mesurées. On peut également prévoir d'utiliser, pour les informations formatées, les informations formatées mesurées et les informations formatées mesurées étendues.

Quoiqu'il en soit, on peut prévoir également d'associer aux informations formatées, les écarts EC trouvés entre informations formatées mesurées et informations formatées étendues. Les informations formatées peuvent ainsi être utilisées par des logiciels de traitement d'images pour obtenir des images dont la distorsion géométrique résiduelle est connue que ce soit pour des images capturées par un appareil de capture d'images ou pour des images restituées par un appareil de restitution d'images.

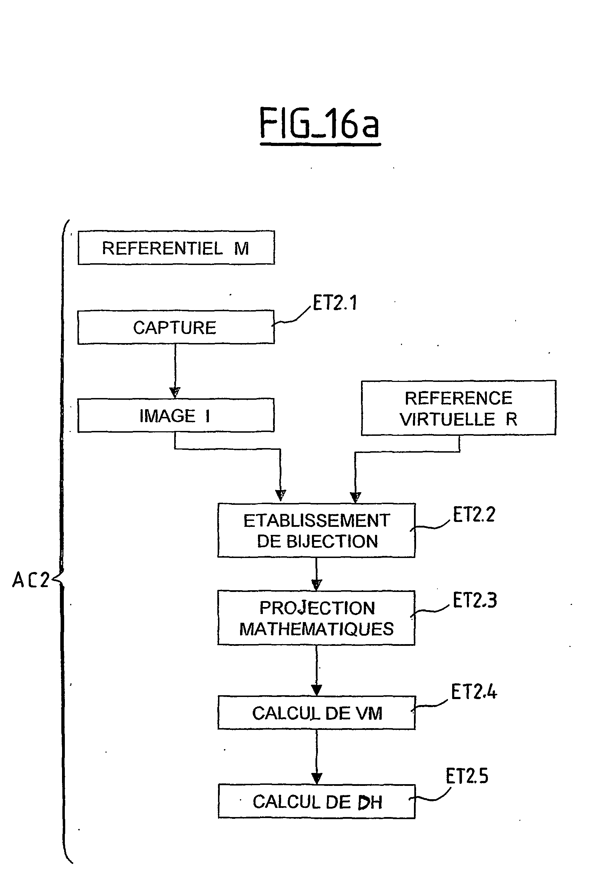

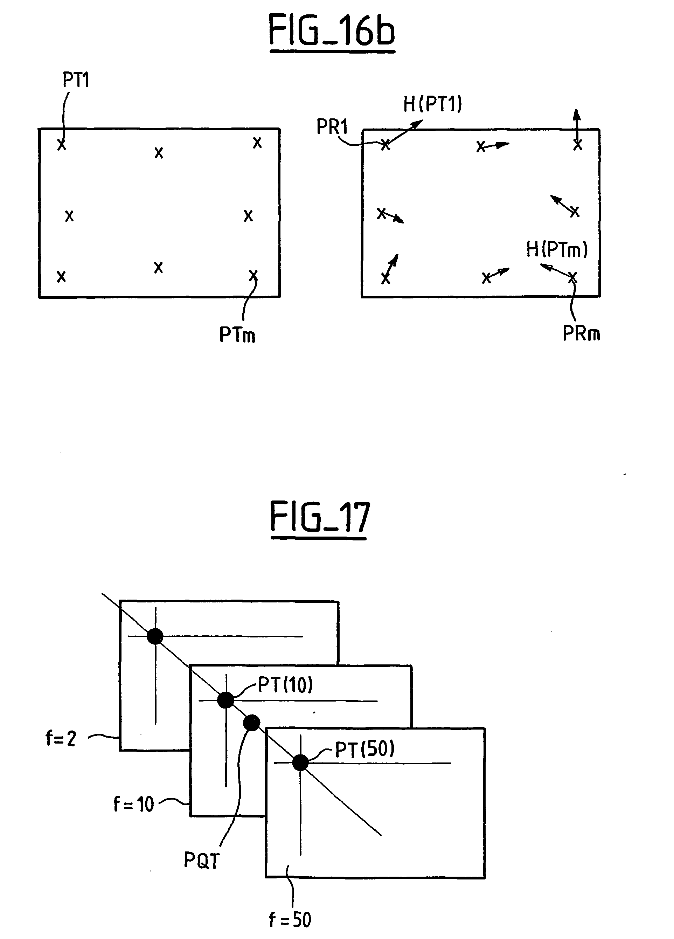

En se reportant aux figures 16a et 16b, on va maintenant décrire une variante de calcul du champ mesuré D(H) d'une image I.

Selon l'organigramme de l'algorithme AC2 de la figure 16a, disposant d'un référentiel M, tel que celui de la figure 14a, on procède au cours d'une première étape ET2.1 à la capture de ce référentiel M à l'aide de l'appareil APP3. On obtient l'image I sur le support SC. On dispose par ailleurs d'une référence virtuelle R sur une surface de référence SR. Cette référence virtuelle R représente en principe, de façon exacte ou quasi exacte, le référentiel M.

Au cours de l'étape ET2.2, on établit une bijection entre les points caractéristiques image PT de l'image I du support SC et les poins de référence PR de la référence virtuelle R de la surface de référence SR (voir également figure 14a).

Au cours de l'étape ET2.3, on choisit une projection mathématique telle qu'une homographie entre différents points du support SC (ou de l'image I) et différents points de la surface de référence SR (ou de la référence virtuelle R).

Au cours de l'étape ET2.4, on calcule pour chaque point caractéristique image PT ou pour chaque point de référence PR, un vecteur caractérisant le défaut de distorsion géométrique. La figure 16b illustre, par un exemple d'implémentation réalisable, cette étape du procédé. On trouve sur cette figure différentes valeurs de points de référence PR répartis sur la surface de référence SR. On associe à chaque point PR la projection mathématique H(PT) du point PT associé par bijection à PR. On calcule, pour chaque point, le vecteur VM ayant pour origine PR et pour extrémité H(PT).

Au cours de l'étape ET2.5, on calcul le champ mesuré.

Ce champ DH, qui peut également être appelé champ de vecteurs mesurés, est constitué :
- des couples de points PT et PR choisis associés par bijection ;
- du vecteur calculé pour chaque point.

Le champ DH peut être également plus simplement constitué :
- du point de référence PR de SR et/ou du point caractéristique image PT de SC et/ou de la projection mathématique du point de référence PR sur SC (ou inversement de la projection du point caractéristique image PT sur SR),
- et du vecteur calculé précédemment et associé à ce point.

Le champ mesuré DH peut comprendre également des caractéristiques variables de l'appareil APP1 (APP2).

Le champ DH peut aussi être constitué d'une approximation des informations mesurées. En effet, pour obtenir un gain de place et/ou de temps de calcul, on peut quantifier l'information formatée mesurée à l'aide d'un nombre limité de bits (3 bits par exemple).

Il est à noter que lors de l'étape ET2.4, le vecteur VM calculé peut être celui ayant pour origine la projection mathématique H(PT) du point PT sur la surface SR et pour extrémité le point PR.

Ou bien, le vecteur VM peut être celui ayant pour origine le point caractéristique PT et pour extrémité la projection mathématique du point PR associé par bijection. Inversement, le vecteur VM peut être celui ayant pour origine la projection mathématique d'un point PR associé par bijection à un point PT et, pour extrémité, ce point PT ou tout autre combinaison mettant en oeuvre lesdits points..

Dans ce qui précède, on a vu qu'une information formatée pouvait contenir des caractéristiques variables. En fait, il pourra s'agir d'une combinaison de caractéristiques variables telle que par exemple une combinaison de la focale, de la mise au point, de l'ouverture de diaphragme, de la vitesse de capture, de l'ouverture, etc. Il est difficilement pensable de calculer les informations formatées relatives aux différentes combinaisons d'autant que certaines caractéristiques de la combinaison peuvent varier de façon continue telles que notamment la focale et la distance.

L'invention prévoit, comme cela est représenté en figure 17, de calculer par interpolation les informations formatées à partir d'informations formatées mesurées pour des combinaisons de caractéristiques variables connues.

Par exemple, sur la représentation simplifiée de la figure 17, chaque plan contient les informations formatées mesurées d'une image pour une valeur de combinaisons déterminée. Par exemple, le plan f=2 correspond à la combinaison « focale=2, distance=7, vitesse de capture=1/100 ». Le plan f=10 correspond à la combinaison « focale=10, distance=7, vitesse de capture=1/100 ». Le plan f=50 correspond à la combinaison « focale=50, distance=7, vitesse de capture=1/100 ».

Pour un point PQT quelconque du support ou PQR quelconque de la surface de référence, dont les caractéristiques variables contiennent entre autre la combinaison : « focale=25, distance=7 et vitesse de capture=1/100 », on interpole une valeur d'information formatée étendue entre les deux plans f=10 et f=50 de la figure 17 et notamment, si on suppose que les plans de la figure 17 représentent les informations formatées mesurées de points PT de l'image, entre les deux points PT(10) et PT(50) des plans f=10 et f=50.

Un exemple de réalisation de l'invention mettra donc en oeuvre le calcul d'un champ mesuré tel que cela a été décrit en relation avec les figures 13 ou 14 puis le calcul d'informations formatées comme cela a été décrit en relation avec les figures 15a à 16b. Ces différents calculs et les étapes correspondantes seront effectués pour différentes combinaisons de caractéristiques variables et/ou pour différentes combinaisons avec une valeur associée. Ensuite, pour un point quelconque (PQT ou PQR) ou un ensemble de points quelconques d'une image I capturée à l'aide d'une combinaison quelconque mais connue, on interpole des informations formatées étendues entre deux plans d'informations formatées mesurées.

Sur la figure 17, on considère un cas où le point dont on veut calculer l'information formatée avait les mêmes coordonnées X et Y que des points dont on connaissait les informations formatées mesurées.

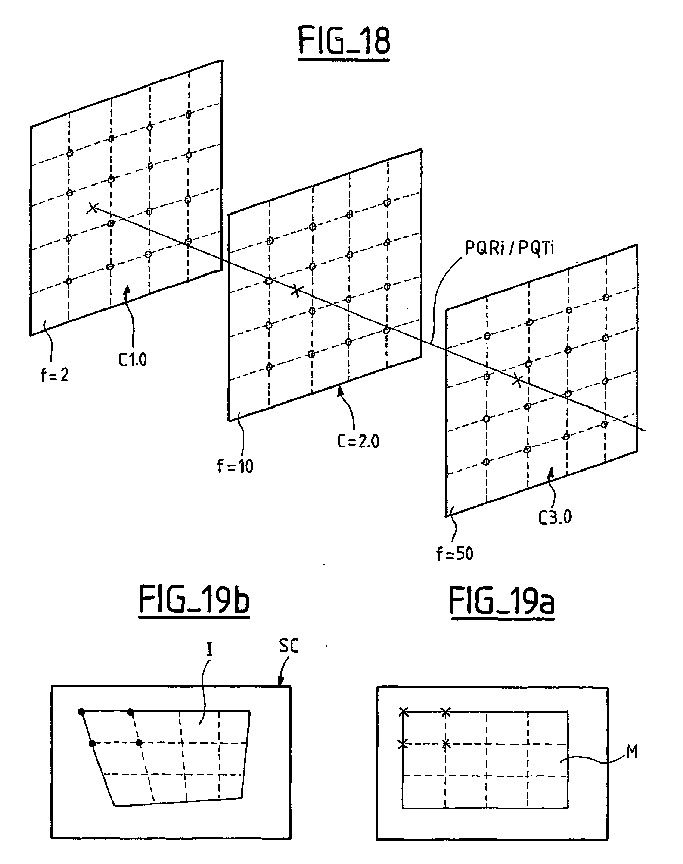

La figure 18 représente un cas où on cherche l'information formatée mesurée d'un point quelconque PQRi ou PQTi situé entre les plans f=10 et f=50 et dont les coordonnées ne correspondent pas aux coordonnées des points des plans f=10 et f=50.

A chaque point, on affecte un argument Ai contenant au moins les coordonnées Xi et Yi du point ainsi que les caractéristiques d'une combinaison de caractéristiques variables.

Le plan f=2 correspond à une combinaison C1.0 de caractéristiques variables. Le plan f=10 correspond à une combinaison C2.0 et le plan f=50 correspond à une combinaison Cm.O.

Chaque point du plan f=2 a pour argument :
« coordonnées X, Y ; combinaison C1.0 ».

Le point PQRi ou PQTi dont on cherche l'information formatée a pour argument :
« coordonnées Xi, Yi ; combinaison Ci ».

Dans ces conditions, le procédé et système réaliseront par exemple une interpolation entre les informations formatées mesurées des plans f=10 et f=50.

Pour un point quelconque PQT/PQR , il suffit de réinjecter par exemple l'argument (X, Y, focale, distance, ouverture, iso, vitesse, flash, etc.) relatif à ce point au sein du modèle paramétrable pour trouver les informations formatées relatives à ce point.

Une façon efficace de calculer l'homographie entre la surface de référence SR et la surface support SC peut être réalisée en choisissant sur le support SC et sur la surface de référence SR, quatre points PTm1 à PTm4 et PRm1 à PRm4 se correspondant par bijection et étant par exemple aux limites périphériques du support SC et de la surface de référence SR. Les positions de ces points sont choisies par exemple de façon à maximiser les surfaces comprises entre ces points.

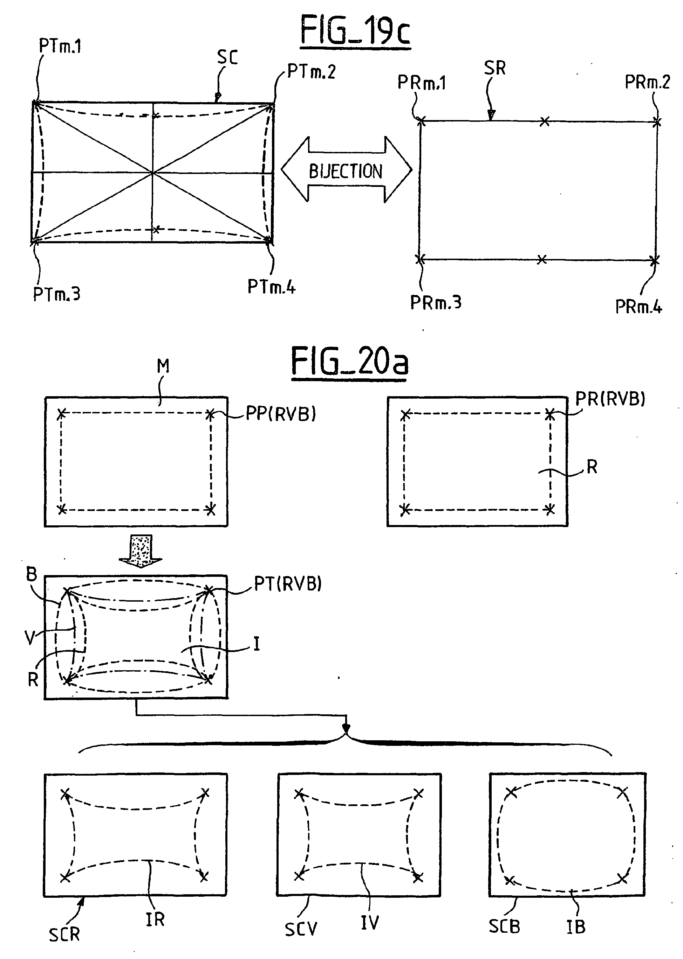

De plus, comme représenté sur la figure 19c, les positions de ces points sont telles que l'intersection des diagonales des quadrilatères définis par ces points se trouve au centre ou proche du centre des quadrilatères.

Ensuite, on calcule une projection mathématique (homographie par exemple) permettant de transformer les quatre points caractéristiques PTm.1 à PTm.4 en les quatre points de référence PRm.1 à PRm.4.

Cette projection mathématique sera associée aux informations formatées de l'image.

Ces informations formatées pourront être utilisées dans un logiciel de traitement d'images pour corriger les distorsions géométriques de perspectives ou pour restituer des images avec un faible changement de perspective.

Une autre façon de choisir les quatre points PTm.1 à 4 et PRm.1 à 4 consiste à prendre dans l'image I quatre points PTm.1 à 4 de sorte qu'ils forment un quadrilatère qui soit le plus proche possible, à un facteur d'échelle près, au quadrilatère formé par les points H(PRm.1 à 4) projections mathématiques des points PRm.1 à 4 correspondants par bijections aux points PTm. 1 à 4.

En se reportant aux figures 20a à 20d, on va décrire des procédés de calcul d'informations formatées relatives à des images couleurs. Une image couleur peut être considérée comme étant constituée de plusieurs images monochromes. Classiquement, on peut considérer qu'une image couleur est une image trichrome constituée de trois images monochromes (rouge, vert, bleu). On sait qu'en optique, les distorsions induites par les optiques et les milieux de transmission de la lumière induisent des effets différents sur les différentes longueurs d'onde. Dans une image trichrome, le même défaut physique d'un appareil induira donc des distorsions différentes sur l'image véhiculée par la lumière à la longueur d'onde du rouge, sur celle véhiculée à la longueur d'onde du vert et sur celle véhiculée à la longueur d'onde du bleu.

Comme représentée en figure 20a, à partir d'un référentiel M trichrome, auquel correspond une référence virtuelle R quasiment identique, correspondra dans l'image I trois images R, V et B superposées qu'on a représentées séparément sur les plans SCR, SCV et SCB. Les trois images IR, IV et IB présentent des distorsions différentes ce qui donne une image trichrome qui présente à la fois de la distorsion géométrique et des aberrations chromatiques.

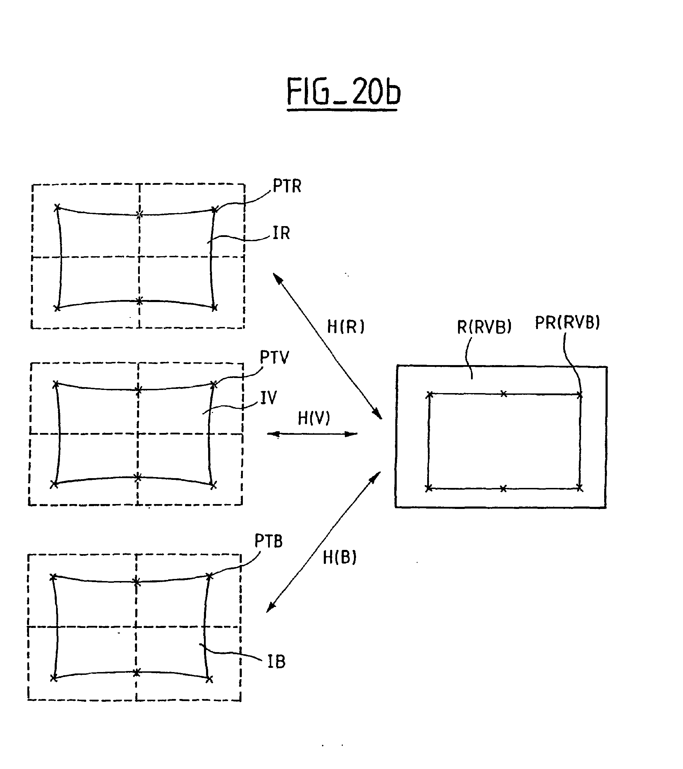

La figure 20b représente le principe du procédé et système permettant d'obtenir des informations formatées qui permettront à un logiciel de traitement d'images de corriger les distorsions et/ou les aberrations chromatiques.

Selon ce procédé et système pour chaque point trichrome de l'image, on va calculer une information formatée par couleur. On va donc considérer qu'il convient de corriger autant d'images monochromes qu'il y a de couleurs. Dans l'exemple trichrome, les calculs seront faits comme si on avait trois images à corriger.

Pour le calcul des informations formatées des trois images IR, IV et IB, on utilise les mêmes procédés et systèmes que ceux décrits en relation avec les figures 13a à 19c.

Selon la figure 20b, on a représenté la surface SR avec une référence virtuelle R comportant des points trichromes PR(RVB) ainsi que la décomposition de l'image I en trois images monochromes IR, IV, IB comportant chacune des points d'une seule couleur PTR, PTV, PTB.

Une façon de calculer les informations formatées relatives à un point trichrome, est d'utiliser la même référence virtuelle R pour les trois plans couleurs. On utilise alors trois projections mathématiques : une projection mathématique HR pour le point rouge PTR, une projection HV pour le point vert PTV et une projection HB pour le point bleu PTB, comme cela est représenté en figure 20b.

Une seconde façon de procéder pour le calcul des informations formatées relative à un point trichrome, est d'utiliser au choix une seule image monochrome IR ou IV ou IB à partir de laquelle on calcul une seule projection mathématique HR ou HB ou HV. Par exemple, les informations formatées sont extraites uniquement de l'image IR et on gardera ces informations formatées pour les images verte et bleu. Cette façon de procéder est économe en temps de calcul et en place mémoire.

Les informations formatées ainsi obtenues permettront ainsi de corriger les distorsions géométriques.

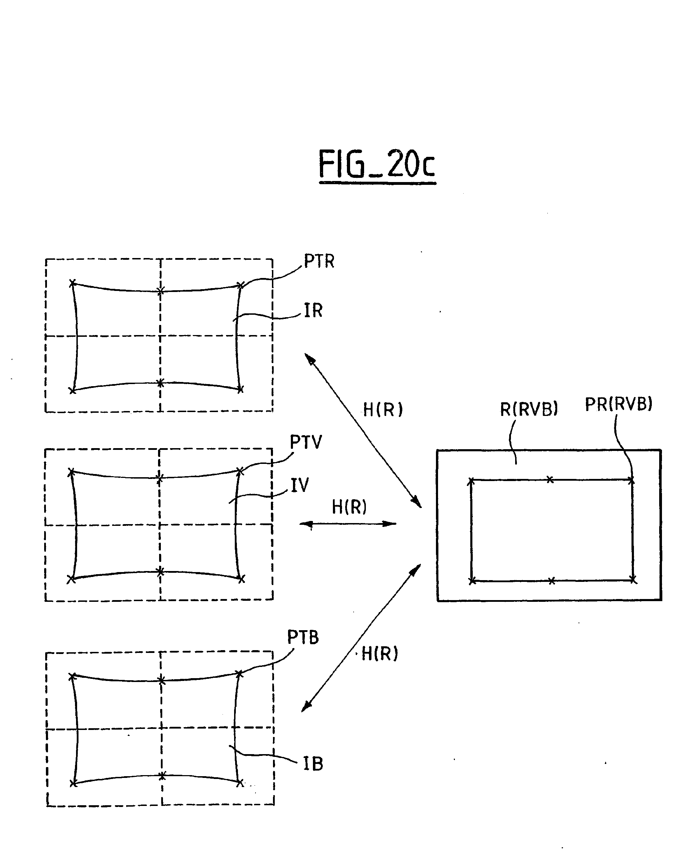

Une autre façon de procéder, selon la figure 20c est d'utiliser la même référence virtuelle R et de calculer pour chaque plan couleur des informations formatées en utilisant une même projection mathématique définie au choix sur un des plans monochrome. Par exemple, on ne calcule que la projection mathématique HR relative au point rouge. Ensuite, on applique cette projection mathématique aux trois points rouge, vert et bleu pour calculer les informations formatées de ces trois points. Dans ce cas, on permettra à un logiciel de traitement d'image de corriger à la fois les distorsions géométriques et les aberrations chromatiques de l'image.

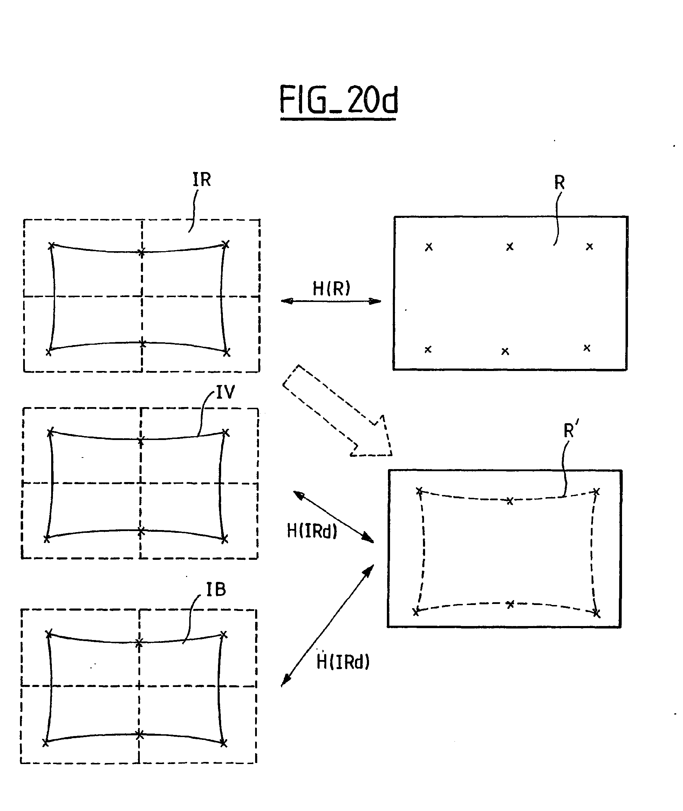

Une autre façon de procéder représentée par la figure 20d consiste :
- Pour l'image d'une couleur déterminée, l'image rouge IR par exemple, à calculer les informations formatées en utilisant une référence virtuelle R supposée parfaite et une projection mathématique H(R) des points de la référence virtuelle sur la surface de l'image rouge IR, ce qui permettra de corriger les distorsions de l'image rouge.
- Pour les images des autres couleurs, les images verte et bleue IV et IB par exemple, à utiliser comme référence virtuelle R', l'image de couleur précédente, l'image rouge IR selon l'exemple pris, et à réaliser une même projection mathématiques H(IRd) des points de cette image rouge sur les surfaces des images verte IV puis bleue IB. De préférence, cette projection mathématique sera une identité (ou projection par identité) des points de l'image rouge sur les images verte et bleue. De cette façon on pourra supprimer les différences (aberrations chromatiques) entre les images rouge, verte et bleue. Les informations formatées des points des images verte et bleue pourront donc comporter la projection mathématique des points de la référence virtuelle R sur l'image rouge ainsi que la projection mathématiques (identité) de l'image rouge sur les images verte et bleue respectivement. Cette façon de procéder peut permettre le cas échéant de ne corriger que les distorsion seule si on n'utilise que les informations formatées extraites de l'image rouge, que le chromatisme seul si on n'utilise que les informations formatées relatives aux images verte et bleue,
ou les deux phénomènes simultanément si on utilise l'ensemble des informations formatées.

Il est également à noter dans la description précédente que le choix des seuils pour chaque modèle paramétrable relatif aux aberrations chromatiques pourra se faire de façon différente à celui relatif à la distorsion géométrique de manière à obtenir plus ou moins de précision sur la compensation de ce défaut.

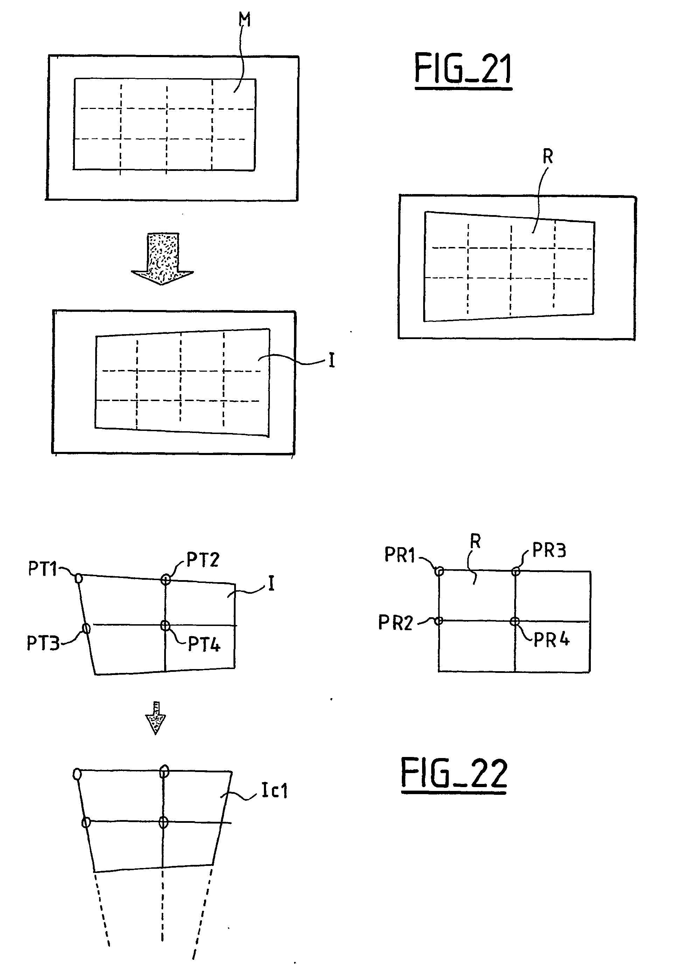

Il est à noter que le choix des projections mathématiques peut ne se faire que pour une partie de l'image. Par exemple, si l'image I et la référence virtuelle R ont des formes telles que représentées en figure 22, et que l'on veut restituer à l'image un effet de perspective, la projection mathématique des points PR sur le support SC pourra n'utiliser que quatre points PT1 à PT4 et PR1 à PR4 qui suffisent à définir une homographie. Les autres points de l'image suivront ensuite cette projection mathématique en vue d'obtenir une image présentant un effet de perspective telle que l'image IC1 représentée en figure 22. Ce choix de la projection mathématique peut être généralisé de manière à obtenir un effet particulier sur l'image qui sera corrigée par les logiciels de traitement à l'aide des informations formatées ainsi calculées.

Il est à noter que pour la correction de distorsions, on a utilisé les informations chromatiques, mais on pourrait également utiliser les informations de luminance.

Dans ce qui précède, on a considéré que la référence virtuelle R était quasiment identique au référentiel M. Si on considère que la référence virtuelle R est exactement identique au référentiel M, on pourra calculer des informations formatées qui permettront de corriger l'image I pour qu'elle soit la réplique exacte du référentiel M.

On peut prévoir, comme cela est représenté en figure 21 que la référence virtuelle R est déformée par rapport au référentiel M. Par exemple, la référence virtuelle a une forme trapézoïdale alors que le référentiel M a une forme rectangulaire. Les informations formatées qu'on obtiendra permettront de corriger l'image I pour induire une déformation en forme de trapèze sur l'image corrigée. Un exemple d'application d'une telle disposition se trouve dans les rétroprojecteurs où on va pouvoir corriger la déformation bien connue induite par ces appareils lors des projections du fait que l'axe du faisceau de projection n'est pas perpendiculaire au plan de l'écran.

On peut également déformer la référence virtuelle par des distorsions pour induire des caractéristiques voire des défauts obtenus avec d'autres appareils que ceux obtenus par les appareils ayant permis de faire l'image I. On pourra, par exemple, induire dans la référence virtuelle des caractéristiques d'appareils perfectionnés ou au contraire d'appareils anciens pour donner un aspect particulier à l'image corrigée. Les informations formatées, les informations formatées mesurées, ou les informations formatées mesurées étendues et obtenues avec une telle référence virtuelle intègrent les distorsions que l'on a induites dans la référence virtuelle., de sorte que les informations formatées et/ ou les informations formatées mesurées peuvent être utilisées par des logiciels de traitement d'images capturées par un premier appareil de capture d'image, pour obtenir des images de qualité comparable en terme de distorsions, à celle d'un deuxième appareil de capture d'image. Cette technique est également applicable à la restitution d'image en considérant qu'un logiciel de traitement d'images peut alors restituer une image à l'aide d'un premier appareil de restitution de qualité comparable en terme de distorsion à celle fournie par un deuxième appareil de restitution.

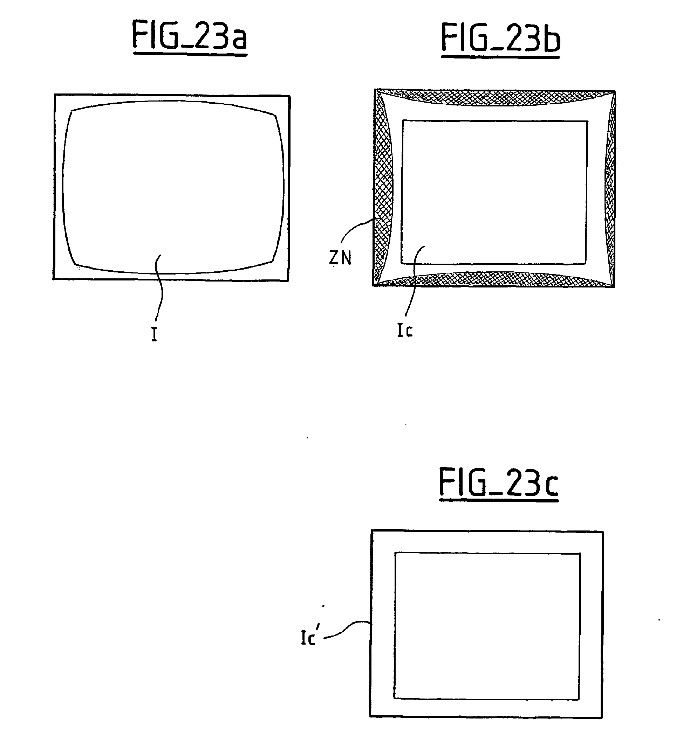

Par ailleurs, on peut prévoir que les informations formatées obtenues, lorsqu'elles seront utilisées par un logiciel de traitement d'image, conduiront à avoir sur le pourtour de l'image corrigée des zones non traitées. Par exemple, une image non corrigée I représentée en figure 23a pourra donner une image corrigée Ic telle que représentée en figure 23b et qui possède des zones non traitées ZN représentées en noir sur la figure 23b.

Les informations formatées pourront donc être préalablement modifiées pour obtenir un effet d'agrandissement Ic' tel que cela est représenté en figure 23c de façon à éliminer les zones non traitées.

De manière pratique lors du calibrage et lors du calcul des informations formatées, on prévoira avantageusement de réaliser les calculs et de faire porter les procédés décrits sur plusieurs images, puis ensuite de faire une moyenne des résultats obtenus en éliminant auparavant, si besoin est, les résultats qui paraissent aberrants.

Par ailleurs, dans le cas de combinaisons faisant intervenir des caractéristiques variables pouvant prendre un grand nombre de valeurs, on peut prévoir de limiter le nombre de combinaisons. Pour cela, pour ces caractéristiques variables, on prévoit de procéder à une analyse en composante principale. Il s'agit de rechercher une ou des directions particulières des composantes correspondant à ces caractéristiques variables pour lesquelles on a des distorsions sensibles. Pour d'autres directions, quelles que soient les autres caractéristiques variables, on constatera probablement qu'on a peu ou pas de variation de distorsion. On ne prendra donc pas en compte ces autres directions.

Dans la ou les directions privilégiées, on choisit le nombre d'images de référence selon différents critères, comme par exemple le fait de pouvoir prédire à la précision souhaitée la n+1 ème combinaison en fonction des n premières combinaisons.

Dans la description qui précède, on a considéré que l'image est constituée de points et on fait porter les traitements des procédés et systèmes décrits sur des points. Cependant, sans sortir du cadre de l'invention, les procédés et systèmes décrits pourraient traiter des ensembles de points formant des éléments et représentant des motifs (pastilles, etc.).

Dans le cas l'appareil ou la chaîne d'appareils possède une caractéristique variable qui ne peut posséder qu'un nombre réduit de valeurs discrètes (trois valeurs discrètes de focale par exemple), on a intérêt en terme de précision à mettre en oeuvre, selon l'exemple pris, trois fois le processus à focale fixe plutôt que d'utiliser une surface polynomiale approximante qui inclurait la focale comme paramètre.

Le champ d'application du dispositif peut couvrir le champ d'application relatif à la qualité des images, étant entendu que la qualité des images peut, entre autre, se mesurer en terme de distorsion résiduelle qu'elles incluent. L'invention s'applique également au domaine de la mesure à partir de la vision par ordinateur connue sous l'expression «métrologie par vision ».

Par ailleurs, l'invention peut être utilisée pour calculer la valeur de la focale qui a été utilisée pour capturer une image. En effet, l'homme du métier, à partir d'une image exempte de distorsions radiales parce que corrigée, peut utiliser les propriétés géométriques des points de fuite comme décrit dans l'article G.-Q . WEI et al , « Camera Calibration by Vanishing Point and Cross Ratio », publié dans IEEE International Conference on Acoustics Speech and Signal Processing, pages 1630-1633, Glasgow, Grande Bretagne, Mai 1989. Cela permettra d'obtenir la distance focale du dispositif de capture ou de restitution d'image ainsi que la position sur le support SC d'image de l'intersection de l'axe optique avec ce support. Ces informations peuvent être utilisées par exemple dans des applications telle que la métrologie par vision.

Par ailleurs, il est à noter que la connaissance du référentiel M est définie à une homographie près, que le dispositif de capture et ou restitution d'image ne requiert aucune contrainte d'orthogonalité au moment de la prise de vue. Les positions des points PT ne sont pas nécessairement placées sur des formes régulières (ligne ou cercle) et peuvent parfaitement avoir une distribution aléatoire. De plus leur position relative peut n'être connue qu'à un facteur d'échelle près.

Si l'invention est mise en oeuvre dans le cas d'une chaîne d'appareils comportant plusieurs appareils, par exemple un projecteur et un appareil photo, ou par exemple une imprimante et un scanner et que l'un des appareils, par exemple l'appareil photo ou le scanner ne présente pas ou peu de défaut de distorsion, le procédé et système produisent des informations formatées relatives à l'autre appareil uniquement. Il s'agit d'une méthode pratique pour produire des informations formatées relatives à un appareil de restitution d'image, en utilisant un appareil de capture d'image sans défaut ou dont les défauts sont préalablement mesurés et corrigés.

Si l'invention est mise en oeuvre dans le cas d'une chaîne d'appareils comportant plusieurs appareils, par exemple un appareil photo et un scanner, le procédé et système produisent des informations formatées relatives aux deux appareils. Il s'agit d'une méthode pratique pour permettre la correction des défauts d'un appareil photo sans pour autant connaître les défauts du scanner, dans le cas où les images utilisées par le présent procédé et système et par les moyens de traitement d'image ont été scannées avec le même appareil.

### Variante de réalisation

D'autres caractéristiques et avantages de l'invention apparaîtront à la lecture :
- des définitions, ci-après explicitées, des termes techniques employés illustrés en se référant aux exemples indicatifs et non limitatifs des figures 1 à 12,
- de la description des figures 1 à 12.

### Scène

On appelle scène 3 un lieu dans l'espace à trois dimensions, qui comprend des objets 107 éclairés par des sources lumineuses.

### Appareil de capture d'image, Image, Capture d'image

On va maintenant décrire en se référant aux figures 3 et 7, ce que l'on entend par appareil de capture d'image 1 et image 103. On appelle appareil de capture d'image 1, un appareil constitué d'une optique 100, d'un ou de plusieurs capteurs 101, d'une électronique 102, d'une zone mémoire 16. Ledit appareil de capture d'image 1 permet à partir d'une scène 3 d'obtenir des images numériques fixes 103 ou animées enregistrées dans la zone mémoire 16 ou transmises à un dispositif externe. Des images animées sont constituées d'une succession dans le temps, d'images fixes 103. Ledit appareil de capture d'image 1 peut prendre la forme notamment d'un appareil photo, d'un caméscope, d'une caméra reliée ou intégrée à un PC, d'une caméra reliée ou intégrée à un assistant personnel, d'une caméra reliée ou intégrée à un téléphone, d'un appareil de visioconférence ou d'une caméra ou appareil de mesure sensible à d'autres longueurs d'onde que celles de la lumière visible comme par exemple une caméra thermique.

On appelle capture d'image le procédé consistant en le calcul de l'image 103 par l'appareil de capture d'image 1.

Dans le cas où un appareil comporte plusieurs sous-ensembles interchangeables, en particulier une optique 100, on appelle appareil de capture d'image 1, une configuration particulière de l'appareil.

### Moyen de restitution d'image, Image restituée, Restitution d'image

On va maintenant décrire en se référant à la figure 2 ce que l'on entend par moyen de restitution d'image 19. Un tel moyen de restitution d'image 19 peut prendre la forme notamment d'un écran de visualisation, d'un téléviseur, d'un écran plat, d'un projecteur, de lunettes de réalité virtuelle, d'une imprimant.

Un tel moyen de restitution d'image 19 comprend :
- une électronique,
- une ou plusieurs sources de lumière, d'électrons ou d'encre,
- un ou plusieurs modulateurs : dispositifs de modulation de lumière, d'électrons ou d'encre,
- un dispositif de focalisation, se présentant notamment sous la forme d'une optique dans le cas d'un projecteur lumineux, ou sous la forme de bobines de focalisation de faisceau électronique dans le cas d'un écran à tube cathodique, ou sous la forme de filtres dans le cas d'un écran plat,
- d'un support de restitution 190 se présentant notamment sous la forme d'un écran dans le cas d'un écran à tube cathodique, d'un écran plat ou d'un projecteur, sous la forme d'un support d'impression sur lequel l'impression est effectuée dans le cas d'une imprimante, ou sous la forme d'une surface virtuelle dans l'espace dans le cas d'un projecteur à image virtuelle.

Ledit moyen de restitution d'image 19 permet à partir d'une image 103 d'obtenir une image restituée 191 sur le support de restitution 190.

Des images animées sont constituées d'une succession dans le temps, d'images fixes.

On appelle restitution d'image le procédé consistant en l'affichage ou l'impression de l'image par le moyen de restitution d'image 19.

Dans le cas où un moyen de restitution 19 comporte plusieurs sous-ensembles interchangeables ou pouvant se déplacer relativement l'un par rapport à l'autre, en particulier le support de restitution 190, on appelle moyen de restitution d'image 19 une configuration particulière.

### Surface du capteur, Centre optique, Distance focale

On va maintenant décrire en se référant à la figure 1 ce que l'on appelle surface du capteur 110.

On appelle surface du capteur 110, la forme dans l'espace dessinée par la surface sensible du capteur 101 de l'appareil de capture d'image 1 au moment de la capture d'image. Cette surface est généralement plane.

On appelle centre optique 111 un point dans l'espace associé à l'image 103 au moment de la capture d'image. On appelle distance focale la distance entre ce point 111 et le plan 110, dans le cas où la surface du capteur 110 est plane.

### Pixel, Valeur de pixel, Temps de pose

On va maintenant décrire, en se référant à la figure 3, ce que l'on entend par pixel 104 et valeur de pixel.

On appelle pixel 104, une zone élémentaire de la surface du capteur 110 obtenue en créant un pavage généralement régulier, de ladite surface du capteur 110. On appelle valeur de pixel, un nombre associé à ce pixel 104.

Une capture d'image consiste à déterminer la valeur de chaque pixel 104. L'ensemble de ces valeurs constitue l'image 103.

Lors d'une capture d'image, la valeur de pixel est obtenue par l'intégration sur la surface du pixel 104, pendant une période de temps appelée temps de pose, d'une partie du flux lumineux provenant de la scène 3 à travers l'optique 100 et par conversion du résultat de cette intégration en valeur numérique. L'intégration du flux lumineux et/ou la conversion du résultat de cette intégration en valeur numérique sont effectuées au moyen de l'électronique 102.

Cette définition de la notion de valeur de pixel s'applique au cas des images 103 en noir et blanc ou en couleur, qu'elles soient fixes ou animées.

Cependant, selon les cas, la partie du flux lumineux concernée est obtenue de diverses façons :
a) Dans le cas d'une image 103 en couleurs, la surface du capteur 110 comporte généralement plusieurs types de pixels 104, respectivement associés à des flux lumineux de longueurs d'onde différentes, tels que par exemple des pixels rouges, verts et bleus.
b) Dans le cas d'une image 103 en couleurs, il peut également y avoir plusieurs capteurs 101 juxtaposés qui reçoivent chacun une partie du flux lumineux.
c) Dans le cas d'une image 103 en couleurs, les couleurs utilisées peuvent être différentes de rouge, vert et bleu, comme par exemple pour la télévision NTSC américaine, et peuvent être en nombre supérieur à trois.
d) Enfin, dans le cas d'une caméra de télévision à balayage dit entrelacé, les images animées produites sont constituées d'une alternance d'images 103 comportant les lignes paires, et d'images 103 comportant les lignes impaires.

### Configuration utilisée, Réglages utilisés, Caractéristiques utilisées

On appelle configuration utilisée la liste des sous-ensembles amovibles de l'appareil de capture d'image 1, par exemple l'optique 100 effectivement montée sur l'appareil de capture d'image 1 si elle est interchangeable. La configuration utilisée est caractérisée notamment par :
- le type de l'optique 100,
- le numéro de série de l'optique 100 ou toute autre désignation.

On appelle réglages utilisés :
- la configuration utilisée telle que définie ci-dessus, ainsi que
- la valeur des réglages manuels ou automatiques disponibles dans la configuration utilisée et ayant un impact sur le contenu de l'image 103. Ces réglages peuvent être effectués par l'utilisateur, notamment à l'aide de boutons, ou calculés par l'appareil de capture d'image 1. Ces réglages peuvent être stockés dans l'appareil, notamment sur un support amovible, ou sur tout dispositif connecté à l'appareil. Ces réglages peuvent inclure notamment les réglages de focalisation, de diaphragme, et de focale de l'optique 100, les réglages de temps de pose, les réglages de balance des blancs, les réglages de traitement d'image intégrés comme le zoom numérique, la compression, le contraste,

On appelle caractéristiques utilisées 74 ou jeu de caractéristiques utilisées 74 :
a) Des paramètres liés aux caractéristiques techniques intrinsèques de l'appareil de capture d'image 1, déterminées au moment de la conception de l'appareil de capture d'image 1. Par exemple, ces paramètres peuvent comprendre la formule de l'optique 100 de la configuration utilisée impactant les défauts géométriques et le piqué des images capturées ; la formule de l'optique 100 de la configuration utilisée inclut notamment la forme, la disposition et le matériau des lentilles de l'optique 100.
   Ces paramètres peuvent en outre comprendre :
   - la géométrie du capteur 101, à savoir la surface du capteur 110 ainsi que la forme et la disposition relative des pixels 104 sur cette surface,
   - le bruit généré par l'électronique 102,
   - la loi de conversion flux lumineux en valeur de pixel.
b) Des paramètres liés aux caractéristiques techniques intrinsèques de l'appareil de capture d'image 1, déterminées au moment de la fabrication de l'appareil de capture d'image 1, et notamment :
   - le positionnement exact des lentilles dans l'optique 100 de la configuration utilisée,
   - le positionnement exact de l'optique 100 par rapport au capteur 101.
c) Des paramètres liés aux caractéristiques techniques de l'appareil de capture d'image 1, déterminées au moment de la capture de l'image 103 et notamment :
   - la position et l'orientation de la surface du capteur 110 par rapport à la scène 3,
   - les réglages utilisés,
   - les facteurs extérieurs, tels que la température, s'ils ont une influence.
d) Les préférences de l'utilisateur, notamment la température de couleur à utiliser pour la restitution d'images. Ces préférences sont par exemple sélectionnées par l'utilisateur à l'aide de boutons.

Les caractéristiques utilisées 74 incluent en particulier la notion de caractéristiques variables.

### Point d'observation, direction d'observation

On va maintenant décrire en se référant à la figure 1 ce que l'on entend par point d'observation 105 et direction d'observation 106.

On appelle surface mathématique 10 une surface géométriquement associée à la surface du capteur 110. Par exemple, si la surface du capteur est plane, la surface mathématique 10 pourra être confondue avec celle du capteur.

On appelle direction d'observation 106 une droite passant par au moins un point de la scène 3 et par le centre optique 111. On appelle point d'observation 105 l'intersection de la direction d'observation 106 et de la surface 10.

### Couleur observée, Intensité observée

On va maintenant décrire en se référant à la figure 1 ce que l'on entend par couleur observée et intensité observée. On appelle couleur observée la couleur de la lumière émise, transmise ou réfléchie par ladite scène 3 dans ladite direction d'observation 106 à un instant donné, et observée depuis ledit point d'observation 105. On appelle intensité observée l'intensité de la lumière émise par ladite scène 3 dans ladite direction d'observation 106 au même instant, et observée depuis ledit point d'observation 105.

La couleur peut être notamment caractérisée par une intensité lumineuse fonction d'une longueur d'onde, ou encore par deux valeurs telles que mesurées par un colorimètre. L'intensité peut être caractérisée par une valeur telle que mesurée avec un photomètre.

Ladite couleur observée et ladite intensité observée dépendent notamment de la position relative des objets 107 dans la scène 3 et des sources d'éclairage présentes ainsi que des caractéristiques de transparence et de réflexion des objets 107 au moment de l'observation.

### Projection mathématique, Image mathématique, Point mathématique, Couleur mathématique d'un point, Intensité mathématique d'un point, Forme mathématique d'un point, Position mathématique d'un point

De façon générale, une transformation mathématique telle qu'une projection mathématique est une opération permettant d'établir une correspondance entre une première image et une deuxième image et plus précisément entre un point d'une première image et un point d'une deuxième image.

Dans les figures 1 à 9d, et notamment la figure 5, une projection mathématique 8 a pour objet de réaliser, à partir d'une image réelle ou d'une scène 3, une image mathématique 70 ou à partir d'une scène de référence 9 une image de synthèse.

Dans les figures 13a à 23c, et notamment la figure 14a, une projection mathématique H a pour objet d'établir une relation entre une image réelle (l'image I sur la figure 14a) et une référence virtuelle (R sur la figure 14a), de façon à établir les différences entre l'image et la référence virtuelle, de façon à avoir des informations pour corriger l'image réelle.

On va décrire plus précisément, en se référant, par exemple, aux figures 1, 5, 9a, 9b, 9c et 9d les notions de projection mathématique 8, image mathématique 70, point mathématique, couleur mathématique d'un point, intensité mathématique d'un point, forme mathématique 41 d'un point, position mathématique 40 d'un point.

Tout d'abord, on va décrire en se référant à la figure 5 comment on réalise une image mathématique 70 par projection mathématique déterminée 8 d'au moins une scène 3 sur la surface mathématique 10.

Préalablement, on va décrire ce que l'on entend par projection mathématique déterminée 8.

Une projection mathématique déterminée 8 associe :
- à une scène 3 au moment de la capture d'une image 103,
- et aux caractéristiques utilisées 74,
   une image mathématique 70.

Une projection mathématique déterminée 8 est une transformation qui permet de déterminer les caractéristiques de chaque point de l'image mathématique 70 à partir de la scène 3 au moment de la capture d'image et des caractéristiques utilisées 74.

De manière préférentielle, la projection mathématique 8 est définie de la façon qui sera ci-après décrite.

On appelle position mathématique 40 du point la position du point d'observation 105 sur la surface mathématique 10.

On appelle forme mathématique 41 du point la forme géométrique, ponctuelle, du point d'observation 105.

On appelle couleur mathématique du point la couleur observée.

On appelle intensité mathématique du point l'intensité observée.

On appelle point mathématique l'association de la position mathématique 40, de la forme mathématique 41, de la couleur mathématique et de l'intensité mathématique pour le point d'observation 105 considéré. L'image mathématique 70 est constituée de l'ensemble desdits points mathématiques.

La projection mathématique 8 de la scène 3 est l'image mathématique 70.

### Projection réelle, Point réel, couleur réelle d'un point, intensité réelle d'un point, forme réelle d'un point, position réelle d'un point

On va ci-après décrire en se référant notamment aux figures 3, 5, 9a, 9b, 9c et 9d les notions de projection réelle 72, point réel, couleur réelle d'un point, intensité réelle d'un point, forme réelle 51 d'un point, position réelle 50 d'un point.

Lors d'une capture d'image, l'appareil de capture d'image 1 associé aux caractéristiques utilisées 74 produit une image. Ainsi, sur les figures 1 et 7, on obtient une image103 de la scène 3 et sur les figures 13a et 14a, on obtient une image I d'un référentiel M. Sur la figure 1, la lumière provenant de la scène 3 selon une direction d'observation 106, traverse l'optique 100 et arrive sur la surface du capteur 110.

On obtient alors pour ladite direction d'observation ce que l'on appelle un point réel (ou point caractéristique PT sur la figure 3a) qui présente des différences par rapport au point mathématique (ou point de référence PR sur la figure 3a).

En se référant aux figures 9a à 9d, on va maintenant décrire les différences entre le point réel et le point mathématique.

La forme réelle 51 associée à ladite direction d'observation 106 n'est pas un point sur la surface du capteur, mais a une forme de nuage dans l'espace à trois dimensions, qui a une intersection avec un ou plusieurs pixels 104. Ces différences ont en particulier pour origine le coma, l'aberration sphérique, l'astigmatisme, le regroupement en pixels 104, l'aberration chromatique, la profondeur de champ, la diffraction, les réflexions parasites, la courbure de champ de l'appareil de capture d'image 1. Elles donnent une impression de flou, de manque de piqué de l'image 103.

En outre, la position réelle 50 associée à ladite direction d'observation 106 présente une différence par rapport à la position mathématique 40 d'un point. Cette différence a en particulier pour origine la distorsion géométrique, qui donne une impression de déformation : par exemple, les murs verticaux paraissent courbes. Elle tient aussi au fait que le nombre de pixels 104 est limité et que par conséquent la position réelle 50 ne peut prendre qu'un nombre fini de valeurs.

En outre, l'intensité réelle associée à ladite direction d'observation 106 présente des différences par rapport à l'intensité mathématique d'un point. Ces différences ont en particulier pour origine le gamma et le vignettage : par exemple les bords de l'image 103 paraissent plus sombres. En outre du bruit peut s'ajouter au signal.

Enfin, la couleur réelle associée à ladite direction d'observation 106 présente des différences par rapport à la couleur mathématique d'un point. Ces différences ont en particulier pour origine le gamma et la dominante colorée. En outre du bruit peut s'ajouter au signal.

On appelle point réel l'association de la position réelle 50, de la forme réelle 51, de la couleur réelle et de l'intensité réelle pour la direction d'observation 106 considérée.

La projection réelle 72 de la scène 3 est constituée par l'ensemble des points réels.

### Modèle de transformation paramétrable, Paramètres, Image corrigée

Dans une variante de réalisation, on appelle modèle de transformation paramétrable 12 (ou de manière condensée, transformation paramétrable 12), une transformation mathématique permettant d'obtenir à partir d'une image 103, et de la valeur de paramètres une image corrigée 71. Lesdits paramètres pouvant notamment être calculés à partir des caractéristiques utilisées 74 comme il est indiqué ci-après.

Ladite transformation permet en particulier de déterminer pour chaque point réel de l'image 103, la position corrigée dudit point réel, la couleur corrigée dudit point réel, l'intensité corrigée dudit point réel, la forme corrigée dudit point réel, à partir de la valeur des paramètres, de la position réelle dudit point réel et des valeurs des pixels de l'image 103. La position corrigée peut être par exemple calculée à l'aide de polynômes de degré fixé en fonction de la position réelle, les coefficients des polynômes dépendant de la valeur des paramètres. La couleur corrigée et l'intensité corrigée peuvent être par exemple des sommes pondérées des valeurs des pixels, les coefficients dépendant de la valeur des paramètres et de la position réelle, ou encore des fonctions non linéaires des valeurs des pixels de l'image 103.

Les paramètres peuvent inclure notamment : la focale de l'optique 100 de la configuration utilisée ou une valeur liée telle que la position d'un groupe de lentilles, la focalisation de l'optique 100 de la configuration utilisée ou une valeur liée telle que la position d'un groupe de lentilles, l'ouverture de l'optique 100 de la configuration utilisée ou une valeur liée telle que la position du diaphragme.

### Différence entre l'image mathématique et l'image corrigée

En se référant à la figure 5, on appelle différence 73 entre l'image mathématique 70 et l'image corrigée 71 pour une scène 3 donnée et des caractéristiques utilisées 74 données, une ou plusieurs valeurs déterminées à partir des nombres caractérisant la position, la couleur, l'intensité, la forme de tout ou partie des points corrigés et de tout ou partie des points mathématiques.

Par exemple, la différence 73 entre l'image mathématique 70 et l'image corrigée 71 pour une scène 3 donnée et des caractéristiques utilisées 74 données peut être déterminée de la façon suivante :
- On choisit des points caractéristiques qui peuvent être par exemple les points d'une grille orthogonale 80 de points disposés régulièrement comme présenté sur la figure 10.
- On calcule la différence 73 par exemple en effectuant la somme pour chaque point caractéristique des valeurs absolues des différences entre chaque nombre caractérisant la position, la couleur, l'intensité, la forme respectivement pour le point corrigé et pour le point mathématique. La fonction somme des valeurs absolues des différences peut être remplacée par une autre fonction comme la moyenne, la somme des carrés ou toute autre fonction permettant de combiner les nombres.

### Scène de référence ou référentiel

On appelle scène de référence 9 (ou référentiel M sur les figures 13 a et suivantes) une scène 3 dont certaines caractéristiques sont connues. A titre d'exemple, la figure 4a présente une scène de référence 9 constituée d'une feuille de papier comportant des cercles remplis de noir et disposés régulièrement. La figure 4b présente une autre feuille de papier comportant les mêmes cercles auxquels s'ajoutent des traits et des surfaces colorées. Les cercles servent à mesurer la position réelle 50 d'un point, les traits la forme réelle 51 d'un point, les surfaces colorées la couleur réelle d'un point et l'intensité réelle d'un point. Cette scène de référence 9 peut être constituée d'un autre matériau que le papier.

### Image de référence

En se référant à la figure 12, on va maintenant définir la notion d'image de référence 11 ( ou image I sur le support SC des figures 13a et suivantes). On appelle image de référence 11, une image de la scène de référence 9 obtenue avec l'appareil de capture d'image 1.

### Image de synthèse, Classe d'images de synthèse

En se référant à la figure 12, on va maintenant définir la notion d'image de synthèse et de classe d'images de synthèse 7. On appelle image de synthèse, une image mathématique 70 obtenue par projection mathématique 8 d'une scène de référence 9. On appelle classe d'images de synthèse 7, un ensemble d'images mathématiques 70 obtenues par projection mathématique 8 d'une ou plusieurs scènes de référence 9, ce pour un ou plusieurs jeux de caractéristiques utilisées 74. Dans le cas où il n'y a qu'une scène de référence 9 et qu'un jeu de caractéristiques utilisées 74, la classe d'images de synthèse 7 ne comprend qu'une image de synthèse. Sur les figures 13a et suivantes, la référence virtuelle R de la surface virtuelle SR peut être considérée comme étant une telle image de synthèse.

### Image transformée

En se référant à la figure 12, on va maintenant définir la notion d'image transformée 13. On appelle image transformée 13, l'image corrigée obtenue par application d'un modèle de transformation paramétrable 12 à une image de référence 11.

### Image transformée proche d'une classe d'images de synthèse, Écart résiduel

On va maintenant décrire, en se référant à la figure 12, la notion d'image transformée 13 proche d'une classe d'images de synthèse 7 et la notion d'écart résiduel 14.

On définit la différence entre une image transformée 13 et une classe d'images de synthèse 7 comme la plus faible différence entre ladite image transformée 13 et l'une quelconque des images de synthèse de ladite classe d'images de synthèse.

Ensuite, on va décrire comment on choisit parmi les modèles de transformation paramétrables 12 celui permettant de transformer chaque image de référence 11 en une image transformée 13 proche de la classe d'images de synthèse 7 de la scène de référence 9 correspondant à ladite image de référence 11, et ce dans différents cas de scènes de référence 9 et caractéristiques utilisées 74.
- Dans le cas d'une scène de référence 9 donnée associée à un jeu de caractéristiques utilisées 74 données, on choisit la transformation paramétrable 12 (et ses paramètres) qui permet de transformer l'image de référence 11 en l'image transformée 13 qui présente la plus faible différence avec la classe d'images de synthèse 7. La classe d'image de synthèse 7 et l'image transformée 13 sont alors dites proches. On appelle écart résiduel 14 ladite différence.
- Dans le cas d'un groupe de scènes de référence données associées à des jeux de caractéristiques utilisées 74 donnés, on choisit la transformation paramétrable 12 (et ses paramètres) en fonction des différences entre l'image transformée 13 de chaque scène de référence 9 et la classe d'images de synthèse 7 de chaque scène de référence 9 considérée. On choisit la transformation paramétrable 12 (et ses paramètres) qui permet de transformer les images de référence 11 en des images transformées 13 telle que la somme desdites différences soit la plus faible. La fonction somme peut être remplacée par une autre fonction comme le produit. La classe d'image de synthèse 7 et les images transformées 13 sont alors dites proches. On appelle écart résiduel 14 une valeur obtenue à partir desdites différences, par exemple en en calculant la moyenne.
- Dans le cas où certaines caractéristiques utilisées 74 sont inconnues, il est possible de les déterminer à partir de la capture de plusieurs images de référence 11 d'au moins une scène de référence 9. Dans ce cas, on détermine simultanément les caractéristiques inconnues et la transformation paramétrable 12 (et ses paramètres) qui permet de transformer les images de référence 11 en des images transformées 13 telles que la somme desdites différences soit la plus faible, notamment par calcul itératif ou par résolution d'équations concernant la somme desdites différences et/ou leur produit et/ou toute autre combinaison appropriée desdites différences. La classe d'image de synthèse 7 et les images transformées 13 sont alors dites proches. Les caractéristiques inconnues peuvent par exemple être les positions et les orientations relatives de la surface du capteur 110 et de chaque scène de référence 9 considérée. On appelle écart résiduel 14 une valeur obtenue à partir desdites différences, par exemple en en calculant la moyenne.

### Meilleure transformation

On appelle meilleure transformation la transformation qui, parmi les modèles de transformation paramétrables 12, permet de transformer chaque image de référence 11 en une image transformée 13 proche de la classe d'images de synthèse 7 de la scène de référence 9 correspondant à ladite image de référence 11.

### Calibrage

On appelle calibrage un procédé qui permet d'obtenir des données relatives aux caractéristiques intrinsèques de l'appareil de capture d'image 1, ce pour une ou plusieurs configurations utilisées constituées chacune d'une optique 100 associée à un appareil de capture d'image 1.

Cas 1 : dans le cas où il n'y a qu'une configuration, ledit procédé comprend les étapes suivantes :
- l'étape de monter ladite optique 100 sur ledit appareil de capture d'image 1,
- l'étape de choisir une ou plusieurs scènes de référence 9,
- l'étape de choisir plusieurs caractéristiques utilisées 74,
- l'étape de capturer des images desdites scènes de référence 9 pour lesdites caractéristiques utilisées,
- l'étape de calculer la meilleure transformation pour chaque groupe de scènes de référence 9 correspondant aux mêmes caractéristiques utilisées 74.

Cas 2 : dans le cas où on considère toutes les configurations correspondant à un appareil de capture d'image 1 donné et à toutes les optiques 100 d'un même type, ledit procédé comprend les étapes suivantes :
- l'étape de choisir une ou plusieurs scènes de référence 9,
- l'étape de choisir plusieurs caractéristiques utilisées 74,
- l'étape de calculer des images 103 à partir des caractéristiques utilisées 74 et notamment des formules de l'optique 100 de la configuration utilisée et des valeurs de paramètres, ce par exemple à l'aide d'un logiciel de calcul d'optique par tracé de rayons,
- l'étape de calculer la meilleure transformation pour chaque groupe de scènes de référence 9 correspondant aux mêmes caractéristiques utilisées.

Cas 3 : dans le cas où on considère toutes les configurations correspondant à une optique 100 donnée et à tous les appareils de capture d'image 1 d'un même type, ledit procédé comprend les étapes suivantes :
- l'étape de monter ladite optique 100 sur un appareil de capture d'image 1 du type considéré,
- l'étape de choisir une ou plusieurs scènes de référence 9,
- l'étape de choisir plusieurs caractéristiques utilisées 74,
- l'étape de capturer des images desdites scènes de référence 9 pour lesdites caractéristiques utilisées,
- l'étape de calculer la meilleure transformation pour chaque groupe de scènes de référence 9 correspondant aux mêmes caractéristiques utilisées.

Le calibrage peut être effectué, de manière préférentielle, par le constructeur de l'appareil de capture d'image 1, ce pour chaque appareil et configuration dans le cas 1. Cette méthode est plus précise mais plus contraignante et bien adaptée dans le cas ou l'optique 100 n'est pas interchangeable.

Le calibrage peut alternativement être effectué par le constructeur de l'appareil de capture d'image 1, ce pour chaque type et configuration d'appareil dans le cas 2. Cette méthode est moins précise mais plus simple.

Le calibrage peut alternativement être effectué par le constructeur de l'appareil de capture d'image 1, ce pour chaque optique 100 et type d'appareil dans le cas 3. Cette méthode est un compromis permettant d'utiliser une optique 100 sur tous les appareils de capture d'image 1 d'un type sans refaire le calibrage pour chaque combinaison d'appareil de capture d'image 1 et d'optique 100.

Le calibrage peut alternativement être effectué par le revendeur ou installateur de l'appareil, ce pour chaque appareil de capture d'image 1 et configuration dans le cas 1.

Le calibrage peut alternativement être effectué par le revendeur ou installateur de l'appareil, ce pour chaque optique 100 et type d'appareil dans le cas 3.

Le calibrage peut alternativement être effectué par l'utilisateur de l'appareil, ce pour chaque appareil et configuration dans le cas 1.

Le calibrage peut alternativement être effectué par l'utilisateur de l'appareil, ce pour chaque optique 100 et type d'appareil dans le cas 3.

### Conception d'optique numérique

On appelle conception d'optique numérique, un procédé pour diminuer le coût de l'optique 100, consistant à :
- concevoir ou choisir dans un catalogue une optique 100 ayant des défauts, notamment de positionnement des points réels,
- diminuer le nombre de lentilles, et/ou
- simplifier la forme des lentilles, et/ou
- utiliser des matériaux, traitements ou procédés de fabrication moins coûteux.

Ledit procédé comprend les étapes suivantes :
- l'étape de choisir une différence (au sens ci-dessus défini) acceptable,
- l'étape de choisir une ou plusieurs scènes de référence 9,
- l'étape de choisir plusieurs caractéristiques utilisées 74.

Ledit procédé comprend en outre l'itération des étapes suivantes :
- l'étape de choisir une formule optique comprenant notamment la forme, le matériau et la disposition des lentilles,
- l'étape de calculer des images 103 à partir des caractéristiques utilisées 74 et notamment des formules de l'optique 100 de la configuration utilisée, en mettant en oeuvre, par exemple, un logiciel de calcul d'optique par tracé de rayons, ou en effectuant des mesures sur un prototype,
- l'étape de calculer la meilleure transformation pour chaque groupe de scènes de référence 9 correspondant aux mêmes caractéristiques utilisées 74,
- l'étape de vérifier si la différence est acceptable, jusqu'à ce que la différence soit acceptable.

### Informations formatées

On appelle informations formatées 15 associées à l'image 103 ou informations formatées 15, tout ou partie des données suivantes :
- des données relatives aux caractéristiques techniques intrinsèques de l'appareil de capture d'image 1, notamment les caractéristiques de distorsion, et/ou
- des données relatives aux caractéristiques techniques de l'appareil de capture d'image 1 au moment de la capture d'image, notamment le temps de pose, et/ou
- des données relatives aux préférences dudit utilisateur, notamment la température de couleurs, et/ou
- des données relatives aux écart résiduels 14.

### Base de données de caractéristiques

On appelle base de données de caractéristiques 22, une base de données comprenant, pour un ou plusieurs appareils de capture d'image 1 et pour une ou plusieurs images 103, des informations formatées 15.

Ladite base de donnée de caractéristiques 22 peut être stockée de manière centralisée ou répartie, et peut être notamment :
- intégrée dans l'appareil de capture d'image 1,
- intégrée dans l'optique 100,
- intégrée sur un dispositif de stockage amovible,
- intégrée dans un PC ou autre ordinateur relié aux autres éléments pendant la capture d'image,
- intégrée dans un PC ou autre ordinateur relié aux autres éléments après la capture d'image,
- intégrée dans un PC ou autre ordinateur capable de lire un support de stockage commun avec l'appareil de capture d'image 1,
- intégrée dans un serveur distant relié à un PC ou autre ordinateur lui-même relié aux autres éléments de la capture d'image.

### Champs

On va maintenant définir la notion de champs 90 en se référant à la figure 8. Les informations formatées 15 associées à l'image 103 peuvent être enregistrées sous plusieurs formes et structurées en une ou plusieurs tables mais elles correspondent logiquement à tout ou partie des champs 90, comprenant :
(a) la distance focale,
(b) la profondeur de champ,
(c) les défauts géométriques.

Lesdits défauts géométriques comprennent les défauts de géométrie de l'image 103 caractérisés par les paramètres associés aux caractéristiques de la prise de vue 74 et une transformation paramétrable représentant les caractéristiques de l'appareil de capture d'image 1 au moment de la prise de vue. Lesdits paramètres et ladite transformation paramétrable permettent de calculer la position corrigée d'un point de l'image 103.

Lesdits défauts géométriques comprennent en outre le vignetage caractérisé par les paramètres associés aux caractéristiques de la prise de vue 74 et une transformation paramétrable représentant les caractéristiques de l'appareil de capture d'image 1 au moment de la prise de vue. Lesdits paramètres et ladite transformation paramétrable permettent de calculer l'intensité corrigée d'un point de l'image 103.

Lesdits défauts géométriques comprennent en outre la dominante colorée caractérisée par les paramètres associés aux caractéristiques de la prise de vue 74 et une transformation paramétrable représentant les caractéristiques de l'appareil de capture d'image 1 au moment de la prise de vue. Lesdits paramètres et ladite transformation paramétrable permettent de calculer la couleur corrigée d'un point de l'image 103.

Lesdits champs 90 comprennent en outre (d) le piqué de l'image 103.

Ledit piqué comprend le flou de résolution de l'image 103 caractérisé par les paramètres associés aux caractéristiques de la prise de vue 74 et une transformation paramétrable représentant les caractéristiques de l'appareil de capture d'image 1 au moment de la prise de vue. Lesdits paramètres et ladite transformation paramétrable permettent de calculer la forme corrigée d'un point de l'image 103. Le flou couvre en particulier le coma, l'aberration sphérique, l'astigmatisme, le regroupement en pixels 104, l'aberration chromatique, la profondeur de champ, la diffraction, les réflexions parasites, la courbure de champ.

Ledit piqué comprend en outre le flou de profondeur de champ, notamment les aberrations sphériques, le coma, l'astigmatisme. Ledit flou dépend de la distance des points de la scène 3 par rapport à l'appareil de capture d'image 1 et est caractérisé par les paramètres associés aux caractéristiques de la prise de vue 74 et une transformation paramétrable représentant les caractéristiques de l'appareil de capture d'image 1 au moment de la prise de vue. Lesdits paramètres et ladite transformation paramétrable permettent de calculer la forme corrigée d'un point de l'image 103.

Lesdits champs 90 comprennent en outre (e) des paramètres de la méthode de quantification. Lesdits paramètres dépendent de la géométrie et la physique du capteur 101, de l'architecture de l'électronique 102 et d'éventuels logiciels de traitement.

Lesdits paramètres comprennent une fonction représentant les variations de l'intensité d'un pixel 104 en fonction de la longueur d'onde et du flux lumineux provenant de ladite scène 3. Ladite fonction comprend notamment les informations de gamma.

Lesdits paramètres comprennent en outre :
- la géométrie dudit capteur 101, notamment la forme, la position relative et le nombre des éléments sensibles dudit capteur 101,
- une fonction représentant la distribution spatiale et temporelle du bruit de l'appareil de capture d'image 1,
- une valeur représentant le temps de pose de la capture d'image.

Lesdits champs 90 comprennent en outre (f) des paramètres des traitements numériques effectués par l'appareil de capture d'image 1, notamment le zoom numérique, la compression. Ces paramètres dépendent du logiciel de traitement de l'appareil de capture d'image 1 et des réglages de l'utilisateur.

Lesdits champs 90 comprennent en outre :
(g) des paramètres représentant les préférences de l'utilisateur, notamment en ce qui concerne le degré de flou, la résolution de l'image 103.
(h) les écarts résiduels 14.

### Calcul des informations formatées

Les informations formatées 15 peuvent être calculées et enregistrées dans la base de données 22 en plusieurs étapes.
a) Une étape à l'issue de la conception de l'appareil de capture d'image 1.
   Cette étape permet d'obtenir des caractéristiques techniques intrinsèques de l'appareil de capture d'image 1, et notamment :
   - la distribution spatiale et temporelle du bruit généré par l'électronique 102,
   - la loi de conversion flux lumineux en valeur de pixel,
   - la géométrie du capteur 101.
b) Une étape à l'issue du calibrage ou conception d'optique numérique.
   Cette étape permet d'obtenir d'autres caractéristiques techniques intrinsèques de l'appareil de capture d'image 1, et notamment, pour un certain nombre de valeurs de caractéristiques utilisées, la meilleure transformation associée et l'écart résiduel 14 associé.
c) Une étape de choix des préférences de l'utilisateur à l'aide de boutons, menus ou support amovible ou connexion à un autre dispositif.
d) Une étape de capture d'image.

Cette étape (d) permet d'obtenir des caractéristiques techniques de l'appareil de capture d'image 1 au moment de la capture d'image, et notamment le temps de pose, déterminé par les réglages manuels ou automatiques effectués.

L'étape (d) permet en outre d'obtenir la distance focale. La distance focale est calculée à partir :
- d'une mesure de la position du groupe de lentilles de focale variable de l'optique 100 de la configuration utilisée, ou
- d'une consigne donnée au moteur de positionnement,
ou
- d'une donnée constructeur si la focale est fixe.

Ladite distance focale peut enfin être déterminée par l'analyse du contenu de l'image 103.

L'étape (d) permet en outre d'obtenir la profondeur de champ. La profondeur de champ est calculée à partir :
- d'une mesure de la position du groupe de lentilles de focalisation de l'optique 100 de la configuration utilisée,
ou
- d'une consigne donnée au moteur de positionnement,
ou
- d'une donnée constructeur si la profondeur de champ est fixe.

L'étape (d) permet en outre d'obtenir les défauts de géométrie et de piqué. Les défauts de géométrie et de piqué correspondent à une transformation calculée à l'aide d'une combinaison des transformations de la base de données de caractéristiques 22 obtenues à l'issue de l'étape (b). Cette combinaison est choisie pour représenter les valeurs de paramètres correspondant aux caractéristiques utilisées 74, notamment la distance focale.

L'étape (d) permet en outre d'obtenir les paramètres de traitement numériques effectués par l'appareil de capture d'image 1. Ces paramètres sont déterminés par les réglages manuels ou automatiques effectués.

Le calcul des informations formatées 15 selon les étapes (a) à (d) peut être réalisé par :
- un dispositif ou logiciel intégré à l'appareil de capture d'image 1, et/ou
- un logiciel pilote dans un PC ou autre ordinateur, et/ou
- un logiciel dans un PC ou autre ordinateur, et/ou
- une combinaison des trois.

Les transformations ci-dessus mentionnées à l'étape (b) et à l'étape (d) peuvent être stockées sous la forme :
- d'une formule mathématique générale,
- d'une formule mathématique pour chaque point,
- d'une formule mathématique pour certains points caractéristiques.

Les formules mathématiques peuvent être décrites par :
- une liste de coefficients,
- une liste de coefficients et de coordonnées.

Ces différentes méthodes permettent de faire un compromis entre la taille de la mémoire disponible pour stocker les formules et la puissance de calcul disponible pour calculer les images corrigées 71.

En outre, afin de retrouver les données, des identifiants associés aux données sont enregistrés dans la base de données 22. Ces identifiants comprennent notamment :
- un identifiant du type et de la référence de l'appareil de capture d'image 1,
- un identifiant du type et de la référence de l'optique 100 si elle est amovible,
- un identifiant du type et de la référence de tout autre élément amovible ayant un lien avec les informations stockées,
- un identifiant de l'image 103,
- un identifiant de l'information formatée 15.

### Image complétée

Comme décrit par la figure 11, on appelle image complétée 120, l'image 103 associée aux informations formatées 15. Cette image complétée 120 peut prendre la forme, de manière préférentielle, d'un fichier. L'image complétée 120 peut également être répartie dans plusieurs fichiers.

L'image complétée 120 peut être calculée par l'appareil de capture d'image 1. Elle peut être également calculée par un dispositif de calcul externe, par exemple un ordinateur.

### Logiciel de traitement d'image

On appelle logiciel de traitement d'image 4, un logiciel qui prend en entrée une ou plusieurs images complétées 120 et qui effectue des traitements sur ces images. Ces traitements peuvent comprendre, notamment :
- de calculer d'une image corrigée 71,
- d'effectuer des mesures dans le monde réel,
- de combiner plusieurs images,
- d'améliorer la fidélité des images par rapport au monde réel,
- d'améliorer la qualité subjective des images,
- de détecter des objets ou personnes 107 dans une scène 3,
- d'ajouter des objets ou personnes 107 dans une scène 3,
- de remplacer ou modifier des objets ou personnes 107 dans une scène 3,
- de retirer les ombres d'une scène 3,
- d'ajouter des ombres dans une scène 3,
- de rechercher des objets dans une base d'images.

Ledit logiciel de traitement d'image peut être :
- intégré à l'appareil de capture d'image 1,
- exécuté sur des moyens de calcul 17 reliés à l'appareil de capture d'image 1 par des moyens de transmission 18.

### Optique numérique

On appelle optique numérique, la combinaison d'un appareil de capture d'image 1, d'une base de données de caractéristiques 22 et d'un moyen de calcul 17 permettant :
- la capture d'image d'une image 103,
- le calcul de l'image complétée,
- le calcul de l'image corrigée 71.

De manière préférentielle, l'utilisateur obtient directement l'image corrigée 71. S'il le souhaite, l'utilisateur peut demander la suppression de la correction automatique.

La base de données de caractéristiques 22 peut être :
- intégrée dans l'appareil de capture d'image 1,
- intégrée dans un PC ou autre ordinateur relié aux autres éléments pendant la capture d'image,
- intégrée dans un PC ou autre ordinateur relié aux autres éléments après la capture d'image,
- intégrée dans un PC ou autre ordinateur capable de lire un support de stockage commun avec l'appareil de capture d'image 1,
- intégrée dans un serveur distant relié à un PC ou autre ordinateur lui même relié aux autre éléments de la capture d'image.

Le moyen de calcul 17 peut être :
- intégré sur un composant avec le capteur 101,
- intégré sur un composant avec une partie de l'électronique 102,
- intégré dans l'appareil de capture d'image 1,
- intégré dans un PC ou autre ordinateur relié aux autres éléments pendant la capture d'image,
- intégré dans un PC ou autre ordinateur relié aux autres éléments après la capture d'image,
- intégré dans un PC ou autre ordinateur capable de lire un support de stockage commun avec l'appareil de capture d'image 1,
- intégré dans un serveur distant relié à un PC ou autre ordinateur lui même relié aux autres éléments de la capture d'image.

### Traitement de la chaîne complète

Dans les précédents paragraphes, on a essentiellement précisé les concepts et la description du procédé et du système selon l'invention pour fournir à des logiciels de traitement d'images 4 des informations formatées 15 liées aux caractéristiques des appareils de capture d'image 1.

Dans les paragraphes qui suivent, on va élargir la définition des concepts et compléter la description du procédé et du système selon l'invention pour fournir à des logiciels de traitement d'images 4 des informations formatées 15 liées aux caractéristiques des moyens de restitution d'image 19. On aura ainsi exposé le traitement d'une chaîne complète.

Le traitement de la chaîne complète permet :
- d'améliorer la qualité de l'image 103 d'un bout à l'autre de la chaîne, pour obtenir une image restituée 191 corrigeant les défauts de l'appareil de capture d'image 1 et du moyen de restitution d'image 19, et/ou
- d'utiliser des optiques de moindre qualité et de moindre coût dans un projecteur vidéo en combinaison avec un logiciel d'amélioration de la qualité des images.

### Définitions liées aux moyens de restitution d'image

En s'appuyant sur les figures 2 et 6, on va maintenant décrire la prise en compte dans les informations formatées 15 des caractéristiques d'un moyen de restitution d'images 19 tel qu'une imprimante, un écran de visualisation ou un projecteur.

Les compléments ou modifications à apporter aux définitions dans le cas d'un moyen de restitution d'image 19 peuvent être extrapolées mutatis mutandis par un homme de métier à partir des définitions fournies dans le cas d'un appareil de capture d'image 1. Toutefois, afin d'illustrer cette méthode, on va maintenant décrire en se référant notamment à la figure 6 les principaux compléments ou modifications.

On désigne par caractéristiques de restitution utilisées 95 les caractéristiques intrinsèques des moyens de restitution d'image 19, les caractéristiques du moyen de restitution d'image 19 au moment de la restitution d'image, et les préférences de l'utilisateur au moment de la restitution des images. Notamment dans le cas d'un projecteur, les caractéristiques de restitution utilisées 95 comprennent la forme et la position de l'écran utilisé. La notion de caractéristiques utilisées de restitution 95 est une extension de la notion de caractéristique variable.

On désigne par modèle de transformation paramétrable de restitution 97 (ou de manière condensée, transformation paramétrable de restitution 97),une transformation mathématique similaire au modèle de transformation paramétrable 12.

On désigne par image corrigée de restitution 94 l'image obtenue par application de la transformation paramétrable de restitution 97 à l'image 103.

On désigne par projection mathématique de restitution 96 une projection mathématique qui associe à une image corrigée de restitution 94, une image mathématique de restitution 92 sur la surface mathématique de restitution géométriquement associée à la surface du support de restitution 190. Les points mathématiques de restitution de la surface mathématique de restitution ont une forme, position, couleur et intensité calculées à partir de l'image corrigée de restitution 94.

On désigne par projection réelle de restitution 90 une projection associant à une image 103 une image restituée 191. Les valeurs de pixels de l'image 103 sont converties par l'électronique des moyens de restitution 19 en un signal qui pilote le modulateur des moyens de restitution 19. On obtient des points réels de restitution sur le support de restitution 190. Lesdits points réels de restitution sont dotés d'une forme, couleur, intensité et position. Le phénomène de regroupement en pixels 104 précédemment décrit dans le cas d'un appareil de capture d'image 1 ne se produit pas dans le cas d'un moyen de restitution d'image. En revanche, un phénomène inverse se produit qui fait notamment apparaître des droites comme des marches d'escalier.

On désigne par différence de restitution 93 la différence entre l'image restituée 191 et l'image mathématique de restitution 92. Cette différence de restitution 93 est obtenue mutatis mutandis comme la différence 73.

On désigne par référence de restitution une image 103 dont les valeurs des pixels 104 sont connues.

On désigne par meilleure transformation de restitution pour une référence de restitution et des caractéristiques utilisées de restitution 95, celle qui permet de transformer l'image 103 en une image corrigée de restitution 94 telle que sa projection mathématique de restitution 92, présente la plus faible différence de restitution 93 avec l'image restituée 191.

Les procédés de calibrage de restitution et de conception d'optique numérique de restitution sont comparables aux procédés de calibrage et de conception d'optique numérique dans le cas d'un appareil de capture d'image 1. Certaines étapes comportent cependant des différences, et notamment les étapes suivantes :
- l'étape de choisir une référence de restitution ;
- l'étape d'effectuer la restitution de ladite référence de restitution ;
- l'étape de calculer la meilleure transformation de restitution.

Les informations formatées 15 liées à un appareil de capture d'image 1 et celles liées à un moyen de restitution d'image 19 peuvent être mises bout à bout pour une même image.

On a précédemment décrit la notion de champ dans le cas d'un appareil de capture d'image 1. Cette notion s'applique également mutatis mutandis dans le cas de moyens de restitution d'image 19. Toutefois, aux paramètres de la méthode de quantification on substitue les paramètres de la méthode de reconstitution du signal, à savoir : la géométrie du support de restitution 190 et sa position, une fonction représentant la distribution spatiale et temporelle du bruit du moyen de restitution d'images 19.

### Généralisation des concepts

Les traits techniques composant l'invention et figurant dans les revendications ont été définis, décrits, illustrés en se référant essentiellement à des appareils de capture d'image de type numérique, c'est-à-dire produisant des images numériques. On conçoit aisément que les mêmes traits techniques s'appliquent dans le cas d'appareils de capture d'image qui seraient la combinaison d'un appareil argentique (un appareil photographique ou cinématographique utilisant des pellicules sensibles argentiques, négatives ou inversibles) et d'un scanner produisant une image numérique à partir des pellicules sensibles développées. Certes, il y a lieu dans ce cas d'adapter au moins certaines des définitions utilisées. Ces adaptations sont à la portée de l'homme de métier. Afin de mettre en évidence le caractère évident de telles adaptations, on se bornera à mentionner que les notions de pixel et de valeur de pixel illustrées en se référant à la figure 3 doivent, dans le cas de la combinaison d'un appareil argentique et d'un scanner, s'appliquer à une zone élémentaire de la surface de la pellicule après que celle-ci ait été numérisée au moyen du scanner. De telles transpositions des définitions vont de soi et peuvent être étendues à la notion de configuration utilisée. A la liste des sous-ensembles amovibles de l'appareil de capture d'image 1 composant la configuration utilisée, on peut par exemple ajouter le type de pellicule photographique effectivement utilisée dans l'appareil argentique.

### Réalisation du système

La figure 25 représente un exemple de réalisation du système permettant de mettre en oeuvre l'invention précédemment décrite. Ce système comportant des premiers moyens de calcul MC1 relatifs à une image I issue d'un appareil APP1 et/ou d'une chaîne d'appareils P3 possédant des caractéristiques variables. Ces moyens de calculs comme décrits précédemment, vont calculer à partir des caractéristiques des appareils, des caractéristiques variables selon l'image et des valeurs associées (focale, mise au point, vitesse, ouverture ...) des informations formatées mesurées IFM. Des seconds moyens de calculs MC2 vont calculer des informations formatées étendues à partir des informations formatées mesurées et des caractéristiques variables et leurs valeurs associées, de sorte que les informations formatées étendues soient plus compactes en mémoire et permettent le cas échéant d'estimer des informations relatives au défaut de distorsion en des points autres que les points relatifs aux informations formatées mesurées. Les informations formatées mesurées IFM et les informations formatées étendues IFE sont fournies à des moyens de sélection MS1 pour produire des informations formatées IF.

### Application de l'invention à la réduction de coût

On appelle réduction de coût, un procédé et système pour diminuer le coût d'un appareil ou d'une chaîne d'appareils P3, notamment le coût de l'optique d'un appareil ou d'une chaîne d'appareils; le procédé consistant à :
- diminuer le nombre de lentilles, et/ou
- simplifier la forme des lentilles, et/ou
- concevoir ou choisir dans un catalogue une optique ayant des défauts P5 plus importants que ceux souhaités pour l'appareil ou la chaîne d'appareils, et/ou
- utiliser des matériaux, composants, traitements ou procédés de fabrication moins coûteux pour l'appareil ou la chaîne d'appareils, ajoutant des défauts P5.

Le procédé et système selon l'invention peut être utilisé pour diminuer le coût d'un appareil ou d'une chaîne d'appareils : on peut concevoir une optique numérique, produire des informations formatées IF relatives aux défauts de l'appareil ou à la chaîne d'appareils, utiliser ces informations formatées pour permettre à des moyens de traitement d'image, intégrés ou non, de modifier la qualité des images provenant ou destinées à l'appareil ou à la chaîne d'appareils, de sorte que la combinaison de l'appareil ou la chaîne d'appareil et des moyens de traitement d'image permettent de capturer, modifier ou restituer des images de la qualité souhaitée avec un coût réduit.

## Revendications

1. Procédé pour produire des informations formatées (IF) liées aux appareils (App1, App2, App3) d'une chaîne d'appareils (APP1) ; ladite chaîne d'appareils comprenant notamment au moins un appareil de capture d'image (App1) et/ou au moins un appareil de restitution d'image (APP2) ; ledit appareil permettant de capturer ou restituer une image (I) sur un support (SC) ; ledit appareil comportant au moins une caractéristique fixe et/ou une caractéristique variable selon l'image (I); ladite caractéristique fixe et/ou caractéristique variable étant susceptible d'être associée à une ou plusieurs valeurs de caractéristiques, notamment la focale et/ou la mise au point et leurs valeurs de caractéristiques associées ;
ledit procédé comprenant l'étape :
de produire des informations formatées (IF) liées aux distorsions géométriques d'au moins un appareil de ladite chaîne,
de produire des informations formatées mesurées (IFM1 à IFMm) liées aux distorsions géométriques dudit appareil à partir d'un champ mesuré (D(H)) ; lesdites informations formatées (IF) pouvant comprendre lesdites informations formatées mesurées,
de produire des informations formatées étendues (IFE1 à IFEm) liées aux distorsions géométriques dudit appareil à partir desdites informations formatées mesurées (IFM1 à IFMm); lesdites informations formatées pouvant comprendre lesdites informations formatées étendues ; lesdites informations formatées étendues présentant un écart (14) par rapport auxdites informations formatées mesurées, et
ledit procédé comprenant un premier algorithme de calcul (AC1) permettant d'obtenir ledit champ mesuré D(H) à partir d'un référentiel (M) comportant des points caractéristiques (PP1, PPi, PPj, PPm) et d'une référence virtuelle (R) composée de points de référence (PR1, PRi, PRj, PRm) sur une surface de référence (SR) ;
ledit premier algorithme de calcul (AC1) comprenant l'étape de capturer ou de restituer ledit référentiel (M) au moyen dudit appareil pour produire une image (I) desdits points caractéristiques sur ledit support (SC) ; l'image d'un point caractéristique (PP1, PPi, PPj, PPm) étant ci-après appelée le point caractéristique image (PT1, PTi, PTj, PTm) ;
ledit premier algorithme de calcul (AC2) comprenant en outre :
- l'étape d'établir une bijection entre lesdits points caractéristiques images (PT1, PTi, PTj, PTm) et lesdits points de référence
- l'étape de sélectionner zéro, une ou plusieurs caractéristiques variables parmi l'ensemble desdites caractéristiques variables, ci-après désignées les caractéristiques variables sélectionnées ;
ledit champ mesuré (D(H)) étant composé de :
- l'ensemble des couples constitués d'un desdits points de référence (PRm) et du point caractéristique image (PTm) associé par ladite bijection, et
- la valeur, pour ladite image (I), de chacune desdites caractéristiques variables sélectionnées.

2. Procédé selon la revendication 1 ; ledit procédé comprenant en outre l'étape de choisir une projection mathématique (H(PRj)), notamment une homographie, entre ledit support (SC) et ladite surface de référence (SR) ;
ledit champ mesuré (D(H)) étant composé de la valeur, pour ladite image (I), de chacune desdites caractéristiques variables sélectionnées et pour chaque point de référence (PRi, PRm) :
- du couple constitué du point de référence (PRj) et de ladite projection mathématique (H(PRj)), sur ladite surface de référence (SR), dudit point caractéristique image (PTj) associé par ladite bijection audit point de référence (PRj), et/ou
- du couple constitué du point caractéristique image (PTj) associé par ladite bijection audit point de référence (PRj) et de ladite projection mathématique (H(PRj)), sur ledit support (SC), dudit point de référence (PRj).

3. Procédé selon l'une quelconque des revendications 1 ou 2; ledit procédé comprenant en outre l'étape d'obtenir lesdites informations formatées étendues relatives à un point de référence quelconque (PQRi) sur ladite surface de référence (SR) et/ou à un point caractéristique image quelconque (PQTi) dudit support (SC), en déduisant lesdites informations formatées, relatives audit point de référence quelconque ou audit point caractéristique image quelconque , à partir desdites informations formatées mesurées.

4. Procédé selon la revendication 1,2 ou 3 ; ledit procédé étant tel que lesdites informations formatées, produites à partir desdites informations formatées mesurées, sont représentées par les paramètres d'un modèle paramétrable choisi parmi un ensemble de modèles paramétrables (SP, 12, 97), notamment un ensemble de polynômes ; ledit procédé comprenant en outre l'étape de sélectionner ledit modèle paramétrable dans ledit ensemble de modèles paramétrables en :
- définissant un écart maximal,
- ordonnant lesdits modèles paramétrables dudit ensemble de modèles paramétrables selon leur degré de complexité de mise en oeuvre,
- choisissant le premier des modèles paramétrables dudit ensemble de modèles paramétrables ordonné pour lequel ledit écart (14) est inférieur audit écart maximal.

5. Procédé selon l'une quelconque des revendications 1 à 4 ; lesdites informations formatées étendues étant lesdites informations formatées mesurées.

6. Procédé selon l'une quelconque des revendications 1 à 5; ledit procédé étant tel que ledit appareil de ladite chaîne d'appareils présente au moins une caractéristique variable selon l'image, notamment la focale et/ou la mise au point ; chaque caractéristique variable étant susceptible d'être associée à une valeur pour former une combinaison constituée de l'ensemble desdites caractéristiques variables et desdites valeurs ;
ledit procédé comprenant en outre les étapes suivantes :
- l'étape de sélectionner des combinaisons prédéterminées,
- l'étape de calculer des informations formatées mesurées, notamment en mettant en oeuvre ledit premier algorithme de calcul (AC2) pour chacune desdites combinaisons prédéterminées ainsi sélectionnées.

7. Procédé selon la revendication 6 ; on appelle argument, selon le cas :
- un point de référence quelconque (PQRi) sur ladite surface de référence (SR) et une combinaison, ou
- un point caractéristique image quelconque (PQTi) de ledit support (SC) et à une combinaison ;
ledit procédé comprenant en outre l'étape de déduire lesdites informations formatées étendues relatives à un argument quelconque à partir desdites informations formatées mesurées.

8. Procédé selon l'une quelconque des revendications précédentes ; ledit procédé comprenant en outre l'étape de sélectionner sur ledit support (SC) quatre points caractéristiques images (PTm.1 à 4) tels que le quadrilatère défini par lesdits quatre points caractéristiques images est celui ayant une surface maximale et un centre de gravité situé à proximité du centre géométrique de l'image (I); ladite projection mathématique étant l'homographie transformant lesdits quatre points caractéristiques images en les points de référence (PRm.1 à 4) associés par ladite bijection auxdits quatre points caractéristiques images.

9. Procédé selon l'une quelconque des revendications précédentes ; ladite image étant une image en couleur composée de plusieurs plans couleur ; ledit procédé comprenant en outre l'étape de produire lesdites informations formatées mesurées en mettant en oeuvre ledit premier algorithme de calcul (AC2) pour au moins deux desdits plans couleur, en utilisant ladite même projection mathématique pour chacun desdits plans couleur.

10. Procédé selon l'une quelconque des revendications précédentes; ladite image étant une image en couleur composée de plusieurs plans couleur (PTR, PTV, PTB); ledit procédé comprenant en outre l'étape de produire lesdites informations formatées mesurées en mettant en oeuvre ledit premier algorithme de calcul (AC2) pour au moins un desdits plans couleur, en utilisant ladite même référence virtuelle pour chacun desdits plans couleur ;
de sorte qu'il est possible d'utiliser lesdites informations formatées et/ou informations formatées mesurées pour corriger les aberrations chromatiques dudit appareil.
**Système**

11. Système pour produire des informations formatées (IF) liées aux défauts d'appareils (App1, App2, App3) d'une chaîne d'appareils (APP1); ladite chaîne d'appareils comprenant notamment au moins un appareil de capture d'image (App1) et/ou au moins un appareil de restitution d'image (APP2); ; ledit appareil permettant de capturer ou restituer une image (I) sur un support (SC) ; ledit appareil comportant au moins une caractéristique fixe et/ou une caractéristique variable selon l'image (I); ladite caractéristique fixe et/ou caractéristique variable étant susceptible d'être associée à une ou plusieurs valeurs de caractéristiques, notamment la focale et/ou la mise au point et leurs valeurs de caractéristiques associées ;
ledit système comprenant:
des moyens de calcul pour produire des informations formatées liées aux distorsions géométriques d'au moins un appareil de ladite chaîne,
des moyens de calcul (MC1) pour produire des informations formatées mesurées liées aux distorsions géométriques dudit appareil à partir d'un champ mesuré (D(H)) ; lesdites informations formatées pouvant comprendre lesdites informations formatées mesurées,
des moyens de calcul (MC2) pour produire des informations formatées étendues (IFE1 à IFEm) liées aux distorsions géométriques dudit appareil à partir desdites informations formatées mesurées (IFM1 à IFMm); lesdites informations formatées pouvant comprendre lesdites informations formatées étendues ; lesdites informations formatées étendues présentant un écart par rapport auxdites informations formatées mesurées,et
des moyens de calcul mettant en oeuvre un premier algorithme de calcul (AC1) permettant d'obtenir ledit champ mesuré (D(H)) à partir d'un référentiel (M) comportant des points caractéristiques (PP1, PPi, PPj, PPm) et d'une référence virtuelle (R) composée de points de référence (PR1, PRi, PRj, PRm) sur une surface de référence (SR) ;
ledit appareil de capture d'image ou ledit appareil de restitution d'image comprenant des moyens de capture ou des moyens de restitution dudit référentiel (M) permettant de produire une image (I) desdits points caractéristiques (PP) sur ledit support (SC) ; l'image d'un point caractéristique (PP) étant ci-après appelée le point caractéristique image (PT);
lesdits moyens de calcul dudit premier algorithme de calcul (AC1) comprenant en outre des moyens de traitement informatique pour :
- établir une bijection entre lesdits points caractéristiques images (PT1, PTi, PTj, PTm) et lesdits points de référence (PR1, PRi, PRj, PRm),
- sélectionner zéro, une ou plusieurs caractéristiques variables parmi l'ensemble desdites caractéristiques variables, ci-après désignées les caractéristiques variables sélectionnées ;
ledit champ mesuré (D(H)) étant composé de :
- l'ensemble des couples constitués d'un desdits points de référence (PRm) et du point caractéristique image (PTm) associé par ladite bijection, et
- la valeur, pour ladite image (I), de chacune desdites caractéristiques variables sélectionnées.

12. Système selon la revendication 11 ; ledit système comprenant en outre des moyens d'analyse pour choisir une projection mathématique (H(PRj)), notamment une homographie, entre ledit support (SC) et ladite surface de référence (SR) ;
ledit champ mesuré (D(H)) étant composé de la valeur, pour ladite image (I), de chacune desdites caractéristiques variables sélectionnées et pour chaque point de référence (PR):
- du couple constitué du point de référence (PRm) et de ladite projection mathématique (H(PRj)), sur ladite surface de référence (SR), dudit point caractéristique image (PTj) associé par ladite bijection audit point de référence (PRj), et/ou
- du couple constitué du point caractéristique image (PTj) associé par ladite bijection audit point de référence (PRj) et de ladite projection mathématique, sur ledit support (SC), dudit point de référence.

13. Système selon la revendication 11 ou 12; ledit système comprenant en outre des moyens de traitement informatique pour obtenir lesdites informations formatées étendues relatives à un point de référence quelconque (PQRi) sur ladite surface de référence (SR) et/ou à un point caractéristique image quelconque PQTi) dudit support (SC), en déduisant lesdites informations formatées, relatives audit point de référence quelconque ou audit point caractéristique image quelconque , à partir desdites informations formatées mesurées.

14. Système selon la revendication 11,12 ou 13 ; ledit système étant tel que lesdites informations formatées, produites à partir desdites informations formatées mesurées, sont représentées par les paramètres d'un modèle paramétrable (SP) choisi parmi un ensemble de modèles paramétrables, notamment un ensemble de polynômes ; ledit système comprenant en outre des moyens de sélection pour sélectionner ledit modèle paramétrable dans ledit ensemble de modèles paramétrables ; lesdits moyens de sélection comprenant des moyens de traitement informatique pour :
- définir un écart maximal,
- ordonner lesdits modèles paramétrables dudit ensemble de modèles paramétrables selon leur degré de complexité de mise en oeuvre,
- choisir le premier des modèles paramétrables dudit ensemble de modèles paramétrables ordonné pour lequel ledit écart est inférieur audit écart maximal.

15. Système selon l'une quelconque des revendications 11 à 14 ; lesdites informations formatées étendues étant lesdites informations formatées mesurées.

16. Système selon l'une quelconque des revendications 11 à 15; ledit système étant tel que ledit appareil de ladite chaîne d'appareil présente au moins une caractéristique variable selon l'image, notamment la focale et/ou la mise au point ; chaque caractéristique variable étant susceptible d'être associée à une valeur pour former une combinaison constituée de l'ensemble desdites caractéristiques variables et desdites valeurs ;
ledit système comprenant en outre :
- des moyens de sélection pour sélectionner des combinaisons prédéterminées,
- des moyens de calcul pour calculer des informations formatées mesurées, notamment en mettant en oeuvre ledit premier algorithme de calcul (AC1) pour chacune desdites combinaisons prédéterminées ainsi sélectionnées.

17. Système selon la revendication 16 ; un argument désignant, selon le cas :
- un point de référence quelconque (PQRj) sur ladite surface de référence (SR) et une combinaison, ou
- un point caractéristique image quelconque (PQTj) dudit support (SC) et une combinaison ;
ledit système comprenant en outre des moyens de traitement informatique (MC2) pour déduire lesdites informations formatées étendues relatives à un argument quelconque à partir desdites informations formatées mesurées.

18. Système selon l'une quelconque des revendications 11 à 17 ; ledit système comprenant en outre des moyens de sélection pour sélectionner sur ledit support (SC) quatre points caractéristiques images (PTm.1 à 4) tels que le quadrilatère défini par lesdits quatre points caractéristiques images est celui ayant une surface maximale et un centre de gravité situé à proximité du centre géométrique de l'image (I); ladite projection mathématique étant l'homographie transformant lesdits quatre points caractéristiques images en les points de référence associés par ladite bijection auxdits quatre points caractéristiques images.

19. Système selon l'une quelconque des revendications 11 à 18 ; ladite image étant une image en couleur composée de plusieurs plans couleur ; ledit système comprenant en outre des moyens de traitement informatique pour produire lesdites informations formatées mesurées en mettant en oeuvre ledit premier algorithme de calcul (AC1) pour au moins deux desdits plans couleur, en utilisant ladite même projection mathématique pour chacun desdits plans couleur ;
de sorte qu'il est possible d'utiliser lesdites informations formatées et/ou informations formatées mesurées pour corriger les distorsions et/ou les aberrations chromatiques dudit appareil.

20. Système selon l'une quelconque des revendications 11 à 19 ; ladite image étant une image en couleur composée de plusieurs plans couleur ; ledit système comprenant en outre des moyens de traitement informatique pour produire lesdites informations formatées mesurées en mettant en oeuvre ledit premier algorithme de calcul (AC1) pour au moins un desdits plans couleur, en utilisant ladite même référence virtuelle pour chacun desdits plans couleur ;
de sorte qu'il est possible d'utiliser lesdites informations formatées et/ou informations formatées mesurées pour corriger les aberrations chromatiques dudit appareil.

## Claims

1. A method for producing formatted information (IF) related to the appliances (App1, App2, App3) of an appliance chain (APP1); the said appliance chain including in particular at least one image-capture appliance (App1) and/or at least one image-restitution appliance (APP2); the said appliance being capable of capturing or restituting an image (I) on a medium (SC); the said appliance containing at least one fixed characteristic and/or one variable characteristic depending on the image (I); the said fixed characteristic and/or variable characteristic being capable of being associated with one or more values of characteristics, especially the focal length and/or the focusing and their values of associated characteristics;
the said method including the stage :
of producing formatted information (IF) related to the geometric distortions of at least one appliance of the said chain,
of producing measured formatted information (IFM1 to IFMm) related to the geometric distortions of the said appliance from a measured field (D(H)); the said formatted information (IF) being able to include the said measured formatted information,
of producing extended formatted information (IFE1 to IFEm) related to the geometric distortions of the said appliance from the said measured formatted information (IFM1 to IFMm); the said formatted information being able to include the said extended formatted information; the said extended formatted information exhibiting a deviation (14) compared with the said measured formatted information,
the said method including a first calculation algorithm (AC1) with which the said measured field D(H) can be obtained from a universal set (M) containing characteristic points (PP1, PPi, PPj, PPm) and from a virtual reference (R) composed of reference points (PR1, PRi, PRj, PRm) on a reference surface (SR);
the said first calculation algorithm (AC1) including the stage of capturing or of restituting the said universal set (M) by means of the said appliance to produce an image (I) of the said characteristic points on the said medium (SC); the image of a characteristic point (PP1, PPi, PPj, PPm) being defined hereinafter as the characteristic image point (PT1, PTi, PTj, PTm);
the said first calculation algorithm (AC2) additionally including:
- the stage of establishing a bijection between the said characteristic image points (PT1, PTi, PTj, PTm) and the said reference points,
- the stage of selecting zero or one or more variable characteristics, referred to hereinafter as the selected variable characteristics, among the set of the said variable characteristics.
the said measured field (D(H)) being composed of:
- the set of pairs composed of one of the said reference points (PRm) and of the characteristic image point (PTm) associated by the said bijection, and
- the value, for the said image (I), of each of the said selected variable characteristics.

2. A method according to claim 1; the said method additionally including the stage of choosing a mathematical projection (H(PRj)), especially a bilinear transformation, between the said medium (SC) and the said reference surface (SR);
the said measured field (D(H)) being composed of the value, for the said image (I), of each of the said selected variable characteristics and, for each reference point (PRi, PRm):
- of the pair composed of the reference point (PRj) and of the said mathematical projection (H(PRj)), onto the said reference surface (SR), of the said characteristic image point (PTj) associated by the said bijection with the said reference point (PRj), and/or
- of the pair composed of the characteristic image point (PTj) associated by the said bijection with the said reference point (PRj), and of the said mathematical projection (H(PRj)), onto the said medium (SC), of the said reference point (PRj).

3. A method according to any one of claims 1 or 2; the said method additionally including the stage of obtaining, from the said measured formatted information, the said extended formatted information related to an arbitrary reference point (PQRi) on the said reference surface (SR) and/or related to an arbitrary characteristic image point (PQTi) of the said medium (SC), by deducing the said formatted information related to the said arbitrary reference point or to the said arbitrary characteristic image point, from the said measured formatted information.

4. A method according to claim 1, 2 or 3; the said method being such that the said formatted information produced from the said measured formatted information is represented by the parameters of a parameterizable model chosen from among a set of parameterizable models (SP, 12, 97), especially a set of polynomials; the said method additionally including the stage of selecting the said parameterizable model within the said set of parameterizable models by:
- defining a maximum deviation,
- ordering the said parameterizable models of the said set of parameterizable models in accordance with their degree of complexity of employment,
- choosing the first of the parameterizable models of the said ordered set of parameterizable models in such a way that the said deviation (14) is smaller than the said maximum deviation.

5. A method according to any one of claims 1 to 4; the said extended formatted information being the said measured formatted information.

6. A method according to any one of claims 1 to 5; the said method being such that the said appliance of the said appliance chain is provided with at least one variable characteristic depending on the image, especially the focal length and/or the focusing; each variable characteristic being capable of being associated with a value to form a combination composed of the set of the said variable characteristics and of the said values;
the said method additionally including the following stages:
- the stage of selecting predetermined combinations,
- the stage of calculating measured formatted information, especially by employing the said first calculation algorithm (AC2) for each of the said predetermined combinations selected in this way.

7. A method according to claim 6; an argument being defined, depending on the case, as:
- an arbitrary reference point (PQRi) on the said reference surface (SR) and a combination, or
- an arbitrary characteristic image point (PQTi) of the said medium (SC) and a combination;
the said method additionally including the stage of deducing the said extended formatted information related to an arbitrary argument from the said measured formatted information.

8. A method according to any one of the preceding claims; the said method additionally including the stage of selecting, on the said medium (SC), four characteristic image points (PTm.1 to 4) such that the quadrilateral defined by the said four characteristic image points is that having a maximum area and a center of gravity situated in the proximity of the geometric center of the image (I); the said mathematical projection being the bilinear transformation that transforms the said four characteristic image points to the reference points (PRm.1 to 4) associated by the said bijection with the said four characteristic image points.

9. A method according to any one of the preceding claims; the said image being a color image composed of a plurality of color planes; the said method additionally including the stage of producing the said measured formatted information by employing the said first calculation algorithm (AC2) for at least two of the said color planes, by using the said same mathematical projection for each of the said color planes.

10. A method according to any one of the preceding claims; the said image being a color image composed of a plurality of color planes (PTR, PTG, PTB); the said method additionally including the stage of producing the said measured formatted information by employing the said first calculation algorithm (AC2) for at least one of the said color planes, by using the said same virtual reference for each of the said color planes;
in such a way that it is possible to use the said formatted information and/or measured formatted information to correct the chromatic aberrations of the said appliance.
**System**

11. A system for producing formatted information (IF) related to the appliances (App1, App2, App3) of an appliance chain (APP1); the said appliance chain including in particular at least one image-capture appliance (App1) and/or at least one image-restitution appliance (APP2); the said appliance being capable of capturing or restituting an image (I) on a medium (SC); the said appliance containing at least one fixed characteristic and/or one variable characteristic depending on the image (I); the said fixed characteristic and/or variable characteristic being capable of being associated with one or more values of characteristics, especially the focal length and/or the focusing and their values of associated characteristics;
the said system including
calculating means for producing formatted information related to the geometric distortions of at least one appliance of the said chain,
calculating means (MC1) for producing, from a measured field (D(H)), measured formatted information related to the geometric distortions of the said appliance; the said formatted information being able to include the said measured formatted information,
calculating means (MC2) for producing extended formatted information (IFE1 to IFEm) related to the geometric distortions of the said appliance from the said measured formatted information (IFM1 to IFMm); the said formatted information being able to include the said extended formatted information; the said extended formatted information exhibiting a deviation compared with the said measured formatted information, and
calculating means employing a first calculation algorithm (AC1) with which the said measured field (D(H)) can be obtained from a universal set (M) containing characteristic points (PP1, PPi, PPj, PPm) and from a virtual reference (R) composed of reference points (PR1, PRi, PRj, PRm) on a reference surface (SR);
the image-capture appliance or the said image-restitution appliance including means for capturing or means for restituting the said universal set (M), with which means an image (I) of the said characteristic points (PP) can be produced on the said medium (SC); the image of a characteristic point (PP) being defined hereinafter as the characteristic image point (PT);
the said means for calculation of the said first calculation algorithm (AC1) additionally including data-processing means for:
- establishing a bijection between the said characteristic image points (PT1, PTi, PTj, PTm) and the said reference points (PR1, PRi, PRj, PRm),
- selecting zero or one or more variable characteristics, referred to hereinafter as the selected variable characteristics, among the set of the said variable characteristics.
the said measured field (D(H)) being composed of:
- the set of pairs composed of one of the said reference points (PRm) and of the characteristic image point (PTm) associated by the said bijection, and
- the value, for the said image (I), of each of the said selected variable characteristics.

12. A system according to claim 11; the said system additionally including analysis means for choosing a mathematical projection (H(PRj)), especially a bilinear transformation, between the said medium (SC) and the said reference surface (SR);
the said measured field (D(H)) being composed of the value, for the said image (I), of each of the said selected variable characteristics and, for each reference point (PR):
- of the pair composed of the reference point (PRm) and of the said mathematical projection (H(PRj)), onto the said reference surface (SR), of the said characteristic image point (PTj) associated by the said bijection with the said reference point (PRj), and/or
- of the pair composed of the characteristic image point (PTj) associated by the said bijection with the said reference point (PRj), and of the said mathematical projection, onto the said medium (SC), of the said reference point.

13. A system according to claim 11 or 12; the said system additionally including data-processing means for obtaining, from the said measured formatted information, the said extended formatted information related to an arbitrary reference point (PQRi) on the said reference surface (SR) and/or related to an arbitrary characteristic image point (PQTi) of the said medium (SC), by deducing the said formatted information related to the said arbitrary reference point or to the said arbitrary characteristic image point.

14. A system according to claim 11, 12 or 13; the said system being such that the said formatted information produced from the said measured formatted information is represented by the parameters of a parameterizable model (SP) chosen from among a set of parameterizable models, especially a set of polynomials; the said system additionally including selection means for selecting the said parameterizable model within the said set of parameterizable models; the said selection means including data-processing means for:
- defining a maximum deviation,
- ordering the said parameterizable models of the said set of parameterizable models in accordance with their degree of complexity of employment,
- choosing the first of the parameterizable models of the said ordered set of parameterizable models in such a way that the said deviation is smaller than the said maximum deviation.

15. A system according to any one of claims 11 to 14; the said extended formatted information being the said measured formatted information.

16. A system according to any one of claims 11 to 15; the said system being such that the said appliance of the said appliance chain is provided with at least one variable characteristic depending on the image, especially the focal length and/or the focusing; each variable characteristic being capable of being associated with a value to form a combination composed of the set of the said variable characteristics and of the said values;
the said system additionally including:
- selection means for selecting predetermined combinations,
- calculating means for calculating measured formatted information, especially by employing the said first calculation algorithm (AC1) for each of the said predetermined combinations selected in this way.

17. A system according to claim 16; an argument designating, depending on the case:
- an arbitrary reference point (PQRj) on the said reference surface (SR) and a combination, or
- an arbitrary characteristic image point (PQTj) of the said medium (SC) and a combination;
the said system additionally including data-processing means (MC2) for deducing, from the said measured formatted information, the said extended formatted information related to an arbitrary argument.

18. A system according to any one of claims 11 to 17; the said system additionally including selection means for selecting, on the said medium (SC), four characteristic image points (PTm.1 to 4) such that the quadrilateral defined by the said four characteristic image points is that having a maximum area and a center of gravity situated in the proximity of the geometric center of the image (I); the said mathematical projection being the bilinear transformation that transforms the said four characteristic image points to the reference points associated by the said bijection with the said four characteristic image points.

19. A system according to any one of claims 11 to 18; the said image being a color image composed of a plurality of color planes; the said system additionally including data-processing means for producing the said measured formatted information by employing the said first calculation algorithm (AC1) for at least two of the said color planes, by using the said same mathematical projection for each of the said color planes;
in such a way that it is possible to use the said formatted information and/or measured formatted information to correct the distortions and/or the chromatic aberrations of the said appliance.

20. A system according to any one of claims 11 to 19; the said image being a color image composed of a plurality of color planes; the said system additionally including data-processing means for producing the said measured formatted information by employing the said first calculation algorithm (AC1) for at least one of the said color planes, by using the said same virtual reference for each of the said color planes;
in such a way that it is possible to use the said formatted information and/or measured formatted information to correct the chromatic aberrations of the said appliance.

## Patentansprüche

1. Verfahren zur Schaffung von formatierten Informationen (IF) im Zusammenhang mit Geräten (App1, App2, App3) einer Gerätekette (APP1); die besagte Gerätekette enthält dabei vor allem zumindest ein Bilderfassungsgerät (App1) und/oder zumindest ein Bildwiedergabegerät (APP2); mit dem besagten Gerät kann ein Bild (I) erfasst oder auf einem Support (SC) wiedergegeben werden; das besagte Gerät weist dabei je nach Bild (I) zumindest eine feste Eigenschaft und/ oder eine variable Eigenschaft auf; die besagte feste Eigenschaft und/ oder variable Eigenschaft sollte dabei einem oder mehreren Eigenschaftswerten zugeordnet werden können, speziell die Brennweite und/ oder die Scharfstellung und den entsprechenden Eigenschaftswerten;
wobei das besagte Verfahren folgende Schritte enthält:
die Schaffung formatierter Informationen (IF) im Zusammenhang mit Geometriefehlern zumindest eines Gerätes der besagten Kette,
die Schaffung gemessener formatierter Informationen (IFM1 bis IFMm) im Zusammenhang mit Geometriefehlern des besagten Gerätes ausgehend von einem gemessenen Feld (D(H)); die besagten formatierten Informationen können dabei die besagten gemessenen formatierten Informationen enthalten,
die Schaffung erweiterter formatierter Informationen (IFE1 bis IFEm) im Zusammenhang mit Geometriefehlern des besagten Gerätes ausgehend von den besagten gemessenen formatierten Informationen (IFM1 bis IFMm); die besagten formatierten Informationen können dabei die besagten erweiterten formatierten Informationen enthalten; die besagten erweiterten formatierten Informationen weisen dabei eine Abweichung (14) im Verhältnis zu den besagten gemessenen formatierten Informationen auf, und
das besagte Verfahren beinhaltet einen ersten Rechenalgorithmus (AC1) mit dem man das besagte gemessene Feld D(H) aus einem Bezugssystem (M) mit Eigenschaftspunkten (PP1, PPi, PPj, PPm) und aus einer virtuellen Referenz (R) bestehend aus Referenzpunkten (PR1, PRi, PRj, PRm) auf einer Referenzfläche (SR) erhält;
der besagte erste Rechenalgorithmus (AC1) enthält dabei den Schritt zur Erfassung oder zur Wiedergabe des besagten Bezugssystems (M) mithilfe des besagten Gerätes zur Erstellung eines Bildes (I) aus den besagten Eigenschaftspunkten am besagten Support (SC); das Bild eines Eigenschaftspunktes (PP1, PPi, PPj, PPm) wird nachfolgend Eigenschaftspunkt Bild (PT1, PTi, PTj, PTm) genannt;
der besagte erste Rechenalgorithmus (AC2) enthält darüber hinaus:
- den Schritt zur Erstellung einer Bijektion zwischen den besagten Eigenschaftspunkten Bild (PT1, PTi, PTj, PTm) und den besagten Referenzpunkten
- den Schritt zur Auswahl von null, einem oder mehrerer variabler Eigenschaften unter den genannten variablen Eigenschaften, die nachfolgend die ausgewählten variablen Eigenschaften genannt werden;
das besagte gemessene Feld (D(H)) besteht aus:
- einer Ansammlung an Paaren bestehend aus einem der genannten Referenzpunkte (PRm) und dem Eigenschaftspunkt Bild (PTm), der durch die Bijektion zugeordnet wird, und
- dem Wert für das besagte Bild (I) für jede einzelne der besagten ausgewählten variablen Eigenschaften.

2. Verfahren nach Anspruch 1, wobei das besagte Verfahren darüber hinaus den Schritt zur Auswahl einer mathematischen Projektion (H(Prj)), im Speziellen einer Homografie zwischen dem besagten Support (SC) und der besagten Referenzfläche (SR) enthält;
das besagte gemessene Feld (D(H)) für das besagte Bild (I) besteht dabei aus dem Wert aller besagten ausgewählten variablen Eigenschaften und für jeden Referenzpunkt (PRm):
- aus dem Paar, das aus dem Referenzpunkt (PRj) und der besagten mathematischen Projektion (H(Prj)) auf der besagten Referenzfläche (SR) des besagten Eigenschaftspunkts Bild (PTj) besteht, der durch die besagte Bijektion dem besagten Referenzpunkt (PRj) zugeordnet wird, und/oder
- aus dem Paar, das aus dem Eigenschaftspunkt Bild (PTj), der durch die Bijektion dem besagten Referenzpunkt (PRj) zugeordnet wird, und aus der besagten mathematischen Projektion (H(Prj)) auf den besagten Support (SC) des besagten Referenzpunktes (PRj) besteht.

3. Verfahren nach einem der Ansprüche 1 oder 2; das besagte Verfahren beinhaltet darüber hinaus den Schritt zum Erhalt der besagten erweiterten formatierten Informationen im Bezug zu irgendeinem Referenzpunkt (PQRi) auf der besagten Referenzfläche (SR) und/oder zu irgendeinem Eigenschaftspunkt Bild (PQTi) des besagten Supports (SC) durch Ableitung der besagten formatierten Informationen im Verhältnis zu irgendeinem besagten Referenzpunkt oder zu irgendeinem besagten Eigenschaftspunkt Bild, ausgehend von den besagten gemessenen formatierten Informationen.

4. Verfahren nach Anspruch 1, 2 oder 3, wobei das Verfahren so ausgelegt ist, dass die besagten formatierten Informationen, die auf Basis der besagten gemessenen formatierten Informationen erstellt werden, durch die Parameter eines parametrierbaren Modells dargestellt werden, das aus einer Reihe von parametrierbaren Modellen (SP, 12, 97), speziell aus einer Reihe von Polynomen ausgewählt wird; das besagte Verfahren enthält darüber hinaus den Schritt der Auswahl des besagten parametrierbaren Modells aus der besagten Reihe an parametrierbaren Modellen, durch:
- die Festlegung einer maximalen Abweichung,
- das Ordnen der besagten parametrierbaren Modelle der besagten Reihe an parametrierbaren Modellen, je nach Komplexität der Anwendung,
- die Auswahl des ersten der parametrierbaren Modelle aus der geordneten Reihe an parametrierbaren Modellen, bei dem die besagte Abweichung (14) unter der besagten maximalen Abweichung liegt.

5. Verfahren nach einem der Ansprüche 1 bis 4, wobei die besagten erweiterten formatierten Informationen die gemessenen formatierten Informationen sind.

6. Verfahren nach einem der Ansprüche 1 bis 5, wobei das Verfahren so ausgelegt ist, dass das besagte Gerät der besagten Gerätekette je nach Bild zumindest eine variable Eigenschaft aufweist, speziell die Brennweite und/oder die Schärfe; jede variable Eigenschaft sollte dabei einem Wert zugeordnet werden können, um eine Kombination zu bilden, die aus der Reihe der genannten variablen Eigenschaften und den besagten Werten gebildet wird;
das besagte Verfahren beinhaltet darüber hinaus die folgenden Schritte:
- den Schritt zur Auswahl der vorbestimmten Kombinationen,
- den Schritt zur Berechnung der gemessenen formatierten Informationen, speziell durch die Anwendung des besagten ersten Rechenalgorithmus (AC2) für alle so ausgewählten vorbestimmten Kombinationen.

7. Verfahren nach Anspruch 6; man bezeichnet als Argument, je nach Fall:
- irgendeinen Referenzpunkt (PQRi) auf der besagten Referenzfläche (SR) und eine Kombination, oder
- irgendeinen Eigenschaftspunkt Bild (PQTi) des genannten Supports (SC) und eine Kombination;
das genannte Verfahren beinhaltet darüber hinaus den Schritt zur Ableitung der besagten erweiterten formatierten Informationen in Bezug zu irgendeinem Argument, ausgehend von den besagten gemessenen formatierten Informationen.

8. Verfahren nach irgendeinem der vorherigen Ansprüche; das besagte Verfahren beinhaltet darüber hinaus den Schritt zur Auswahl von vier Eigenschaftspunkten Bild (PTm1 bis 4) auf dem besagten Support (SC), so wie jenes Viereck, das von den besagten vier Eigenschaftspunkten Bild definiert wird, jenes ist, das eine größtmögliche Fläche aufweist und einen Schwerpunkt, der in der Nähe der geometrischen Mitte des Bildes (I) liegt; die besagte mathematische Projektion ist dabei die Homografie, die die vier Eigenschaftspunkte Bild in die Referenzpunkte (PRm1 bis 4) umwandelt, die durch die besagte Bijektion den vier Eigenschaftspunkten Bild zugeordnet werden.

9. Verfahren nach irgendeinem der vorherigen Ansprüche; das besagte Bild ist dabei ein Farbbild bestehend aus mehreren Farbebenen; das besagte Verfahren beinhaltet darüber hinaus den Schritt zur Schaffung der besagten gemessenen formatierten Informationen durch die Anwendung des besagten ersten Rechenalgorithmus (AC2) für zumindest zwei der besagten Farbebenen, durch die Verwendung der besagten selben mathematischen Projektion für jede der besagten Farbebenen.

10. Verfahren nach irgendeinem der vorherigen Ansprüche; das besagte Bild ist ein Farbbild bestehend aus mehreren Farbebenen (PTR, PTV, PTB); das besagte Verfahren beinhaltet darüber hinaus den Schritt zur Schaffung der besagten gemessenen formatierten Informationen durch die Anwendung des besagten ersten Rechenalgorithmus (AC2) für zumindest eine der besagten Farbebenen, durch die Verwendung der besagten selben virtuellen Referenz für jede der besagten Farbebenen;
sodass es möglich wird, die besagten formatierten Informationen und/oder die besagten gemessenen formatierten Informationen zu verwenden, um die chromatischen Aberrationen des Gerätes zu korrigieren.
**System**

11. System zur Schaffung von formatierten Informationen (IF) im Zusammenhang mit Gerätefehlern (App1, App2, App3) einer Gerätekette (APP1); die besagte Gerätekette beinhaltet dabei zumindest ein Bilderfassungsgerät (App1) und/oder zumindest ein Bildwiedergabegerät (APP2); mit den besagten Geräten kann ein Bild (I) erfasst oder auf einem Support (SC) wiedergegeben werden; das besagte Gerät beinhaltet dabei je nach Bild (I) zumindest eine feste Eigenschaft und/oder eine variable Eigenschaft, die einem oder mehreren Eigenschaftswerten zugeordnet werden können sollte, speziell die Brennweite und/oder die Bildschärfe und ihre entsprechenden Eigenschaftswerte;
das besagte Verfahren beinhaltet:
Berechnungsdaten zur Schaffung von formatierten Informationen im Zusammenhang mit geometrischen Verzerrungen von zumindest einem Gerät der besagten Kette,
Berechnungsdaten (MC1) zur Schaffung von gemessenen formatierten Informationen im Zusammenhang mit geometrischen Verzerrungen des besagten Geräts, ausgehend von einem gemessenen Feld (D(H)); die besagten formatierten Informationen können dabei die besagten gemessenen formatierten Informationen enthalten,
Berechnungsdaten (MC2) zur Schaffung erweiterter formatierter Informationen (IFE1 bis IFEm) im Zusammenhang mit geometrischen Verzerrungen des besagten Gerätes ausgehend von den besagten gemessenen formatierten Informationen (IFM1 bis IFMm); die besagten formatierten Informationen können dabei die besagten erweiterten formatierten Informationen enthalten; die erweiterten formatierten Informationen weisen dabei eine Abweichung im Verhältnis zu den besagten gemessenen formatierten Informationen auf, und
Berechnungsdaten zur Anwendung eines ersten Rechenalgorithmus (AC1) zum Erhalt des besagten gemessenen Feldes (D(H)) ausgehend von einem Bezugssystem (M) mit Eigenschaftspunkten (PP1, PPi, PPj, PPm) und einer virtuellen Referenz (R) bestehend aus Referenzpunkten (PR1, PRi, PRj, PRm) auf einer Referenzfläche (SR);
das besagte Bilderfassungsgerät oder das besagte Bildwiedergabegerät beinhaltet dabei Erfassungsdaten oder Wiedergabemitteldaten des besagten Bezugssystems (M) wodurch aus den Eigenschaftspunkten (PP) ein Bild (I) auf dem besagten Support (SC) erzeugt werden kann; das Bild eines Eigenschaftspunkts (PP) wird nachfolgend Eigenschaftspunkt Bild (PT) genannt;
die besagten Berechnungsdaten des genannten ersten Rechenalgorithmus (AC1) enthalten darüber hinaus Datenverarbeitungssysteme zur:
- Durchführung einer Bijektion zwischen den genannten Eigenschaftspunkten Bild (PT1, PTi, PTj, PTm) und den Referenzpunkten (PR1, PRi, PRj, PRm),
- Auswahl von null, einer oder mehrerer variabler Eigenschaften aus einer Reihe besagter variabler Eigenschaften, die nachfolgend ausgewählte variable Eigenschaften genannt werden;
das besagte gemessene Feld (D(H)) besteht dabei aus:
- einer Reihe von Paaren, die aus einem der genannten Referenzpunkte (PRm) und dem Eigenschaftspunkt Bild (PTm), der durch die genannte Bijektion zugeordnet wird, bestehen, und
- dem Wert für das besagte Bild (I) aller besagten ausgewählten variablen Eigenschaften.

12. System nach Anspruch 11, wobei das System darüber hinaus über Analysesysteme zur Auswahl einer mathematischen Projektion (H(Prj)) verfügt, speziell einer Homografie zwischen dem besagten Support (SC) und der besagten Referenzfläche (SR);
das besagte gemessene Feld (D(H)) besteht dabei für das besagte Bild (I) aus dem Wert aller besagten ausgewählten variablen Eigenschaften und für jeden Referenzpunkt (PR):
- aus dem Paar, das aus dem Referenzpunkt (PRm) und der besagten mathematischen Projektion (H(Prj)) auf der besagten Referenzfläche (SR) des besagten Eigenschaftspunkts Bild (PTj) besteht, der durch die besagte Bijektion dem Referenzpunkt (PRj) zugeordnet wird, und/oder
- aus dem Paar, das aus dem Eigenschaftspunkt Bild (PTj), der durch die besagte Bijektion dem Referenzpunkt (PRj) zugeordnet wird, und aus der besagten mathematischen Projektion auf den besagten Support (SC) des besagten Referenzpunktes, besteht.

13. System nach Anspruch 11 oder 12, wobei das besagte System darüber hinaus über Datenverarbeitungssysteme für den Erhalt der besagten relativen erweiterten formatierten Informationen in Bezug zu irgendeinem Referenzpunkt (PQRi) auf der besagten Referenzfläche (SR) und/oder zu irgendeinem Eigenschaftspunkt Bild (PQTi) des besagten Supports (SC), durch Ableitung der besagten formatierten Informationen im Verhältnis zu irgendeinem Referenzpunkt oder zu irgendeinem Eigenschaftspunkt Bild, ausgehend von den gemessenen formatierten Informationen.

14. System nach Anspruch 11, 12 oder 13, wobei das besagte System so ausgelegt ist, dass die besagten formatierten Informationen, die auf Basis der besagten gemessenen formatierten Informationen erstellt werden, durch die Parameter eines parametrierbaren Modells (SP) dargestellt werden, die aus einer Reihe parametrierbarer Modelle, speziell aus einer Reihe von Polynomen, ausgewählt werden; das besagte System beinhaltet dabei darüber hinaus Auswahlsysteme zum Auswählen des besagten parametrierbaren Modells aus der besagten Reihe an parametrierbaren Modellen; die besagten Auswahlsysteme beinhalten dabei Datenverarbeitungssysteme zum:
- Festlegen einer maximalen Abweichung,
- Ordnen der besagten parametrierbaren Modelle der besagten Reihe an parametrierbaren Modellen, je nach Komplexität der Anwendung,
- Auswählen des ersten parametrierbaren Modells der besagten geordneten Reihe an parametrierbaren Modellen, für die die besagte Abweichung unter der maximalen Abweichung liegt.

15. System nach irgendeinem der Ansprüche 11 bis 14, wobei die erweiterten formatierten Informationen die besagten gemessenen formatierten Informationen sind

16. System nach irgendeinem der Ansprüche 11 bis 15, wobei das System so ausgelegt ist, dass das besagte Gerät der besagten Gerätekette je nach Bild zumindest eine variable Eigenschaft aufweist, speziell die Brennweite und/oder die Bildschärfe; jede variable Eigenschaft sollte dabei einem Wert zugeordnet werden können, um eine Kombination zu bilden, die aus der Reihe der besagten variablen Eigenschaften und der besagten Werte besteht;
das besagte System besteht darüber hinaus:
- aus den Auswahlsystemen zur Auswahl der vorbestimmten Kombinationen,
- aus den Berechnungsmitteln zur Berechnung der gemessenen formatierten Informationen, speziell durch die Umsetzung des besagten ersten Rechenalgorithmus (AC1) für alle so ausgewählten vorbestimmten Kombinationen.

17. System nach Anspruch 16, wobei ein Argument je nach Fall folgendes bezeichnet:
- irgendeinen Referenzpunkt (PQRj) auf der besagten Referenzfläche (SR) und eine Kombination, oder
- irgendeinen Eigenschaftspunkt Bild (PQTj) des besagten Supports (SC) und eine Kombination;
das besagte System beinhaltet darüber hinaus Datenverarbeitungssysteme (MC2) zur Ableitung der besagten erweiterten formatierten Informationen in Bezug zu irgendeinem Argument, ausgehend von den besagten gemessenen formatierten Informationen.

18. System nach irgendeinem der Ansprüche 11 bis 17, wobei das besagte System darüber hinaus über Auswahlsysteme zur Auswahl von vier Eigenschaftspunkten Bild (PTm1 bis 4) auf dem besagten Support (SC), wie jenes Viereck, das von den besagten vier Eigenschaftspunkten Bild definiert wird, jenes ist, das eine größtmögliche Fläche aufweist, und einen Schwerpunkt, der in der Nähe der geometrischen Mitte des Bildes (I) liegt; die besagte mathematische Projektion ist dabei die Homografie, die die vier Eigenschaftspunkte Bild in die Referenzpunkte (PRm1 bis 4) umwandelt, die durch die besagte Bijektion den vier Eigenschaftspunkten Bild zugeordnet werden.

19. System nach irgendeinem der Ansprüche 11 bis 18; das besagte Bild ist dabei ein Farbbild, das aus mehreren Farbebenen besteht; das besagte Verfahren beinhaltet darüber hinaus den Schritt zur Schaffung der besagten gemessenen formatierten Informationen durch die Anwendung des besagten ersten Rechenalgorithmus (AC1) für zumindest zwei der besagten Farbebenen, durch die Verwendung der selben mathematischen Projektion für jede der besagten Farbebenen;
sodass es möglich wird, die besagten formatierten Informationen und/oder die besagten gemessenen formatierten Informationen zu verwenden, um die Verzerrungen und/oder chromatischen Aberrationen des Gerätes zu korrigieren.

20. System nach irgendeinem der Ansprüche 11 bis 19; das besagte Bild ist ein Farbbild, das aus mehreren Farbebenen besteht; das besagte Verfahren beinhaltet darüber hinaus den Schritt zur Schaffung der besagten gemessenen formatierten Informationen durch die Anwendung des besagten ersten Rechenalgorithmus (AC1) für zumindest eine der besagten Farbebenen, durch die Verwendung der besagten selben virtuellen Referenz für jede der besagten Farbebenen;
sodass es möglich wird, die besagten formatierten Informationen und/oder die besagten gemessenen formatierten Informationen zu verwenden, um die chromatischen Aberrationen des Gerätes zu korrigieren.
